(19) Europäisches Patentamt
European Patent Office
Office européen des brevets

(11) EP 4 572 264 A1

(12) EUROPEAN PATENT APPLICATION
published in accordance with Art. 153(4) EPC

(43) Date of publication:
18.06.2025 Bulletin 2025/25

(51) International Patent Classification (IPC):
H04L 27/00 (2006.01)

(21) Application number: 22963204.7

(22) Date of filing: 28.10.2022

(52) Cooperative Patent Classification (CPC):
H04L 27/00

(86) International application number:
PCT/CN2022/128423

(87) International publication number:
WO 2024/087223 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(72) Inventors:
• WEI, Fan
  Shenzhen, Guangdong 518129 (CN)
• WANG, Lei
  Shenzhen, Guangdong 518129 (CN)

(74) Representative: Pfenning, Meinig & Partner mbB
Patent- und Rechtsanwälte
Theresienhöhe 11a
80339 München (DE)

(71) Applicant: Huawei Technologies Co., Ltd.
Shenzhen, Guangdong 518129 (CN)

(54) COMMUNICATION METHOD AND APPARATUS

(57) Embodiments of this application relate to the field of communication technologies, and disclose a communication method and apparatus, to reduce interference between terminal devices. A specific solution is as follows: After obtaining a plurality of symbols, a terminal device maps at least one codeword in a same symbol to different frequency domain units, where there is a spacing between frequency domain units to which codeword elements included in a same codeword are mapped. The terminal device processes a frequency domain signal corresponding to each symbol, to obtain a time domain signal corresponding to the symbol, and transmits the time domain signal corresponding to each symbol to a network device.

FIG. 13

**Description**

**TECHNICAL FIELD**

This application relates to the field of communication technologies, and in particular, to a communication method and apparatus.

**BACKGROUND**

In a wireless communication system, multiplexing for a plurality of terminal devices on resources such as time domain, frequency domain, or spatial domain resources is an issue that needs to be carefully considered. In an existing long term evolution (long term evolution, LTE) or new radio (new radio, NR) system, resources such as time domain, frequency domain, or spatial domain resources may be allocated to terminal devices by using an orthogonal multiple access scheme, so that each terminal device can exclusively occupy a specific frequency domain, time domain, or spatial domain resource.

With continuous popularization of applications such as the Internet of Things, a quantity of terminal devices accessing a wireless network increases exponentially. In the context of limited spectrum and other communication resources, a non-orthogonal multiple access scheme needs to be considered. That is, a plurality of terminal devices share same resources such as time domain, frequency domain, or spatial domain resources in a communication process. In non-orthogonal multiple access, resource sharing may cause interference between terminal devices (that is, multiple access interference).

**SUMMARY**

This application provides a communication method and apparatus, to reduce interference between terminal devices.

To achieve the foregoing objective, the following technical solutions are used in embodiments of this application.

According to a first aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The following uses an example in which the method is performed by the terminal device for description. The communication method includes: The terminal device obtains a plurality of symbols, where each symbol includes at least one codeword, and one codeword includes at least one pilot codeword and/or at least one data codeword. The terminal device maps at least one codeword in a same symbol to at least one frequency domain unit, to obtain a frequency domain signal corresponding to the symbol. Different codewords are mapped to different frequency domain units, and there is a spacing between frequency domain units to which codeword elements included in a same codeword are mapped. The terminal device processes a frequency domain signal corresponding to each symbol to obtain a time domain signal corresponding to the symbol, and transmits the time domain signal corresponding to each symbol to a network device.

Based on the foregoing technical solution, when there is at least one codeword in one symbol, the terminal device may map the at least one codeword of the same symbol to different frequency domain units, to obtain the frequency domain signal corresponding to each symbol. In addition, there is a spacing between the frequency domain units to which the codeword elements included in each codeword are mapped. The terminal device may separately process frequency domain signals corresponding to a plurality of symbols, to obtain time domain signals corresponding to the plurality of symbols, thereby reducing multiple access interference between terminal devices while reducing a PAPR of the time domain signal corresponding to the symbol.

In a possible implementation, a spacing between frequency domain units to which any adjacent pilot codeword elements are mapped is equal, and a spacing between frequency domain units to which any adjacent data codeword elements are mapped is equal. In other words, a codeword element included in a same codeword may be mapped to at least one frequency domain unit in an equally spaced manner.

In a possible implementation, if the one codeword includes at least one pilot codeword and at least one data codeword, the at least one pilot codeword and the at least one data codeword are mapped to different frequency domain units. In this way, it can be ensured that no interference exists between a pilot codeword and a data codeword in one symbol.

In a possible implementation, the terminal device may map the at least one codeword in the same symbol to the at least one frequency domain unit based on configuration information, to obtain the frequency domain signal corresponding to the symbol.

In some possible implementations, the configuration information includes one or more of resource configuration information indicating a frequency domain unit corresponding to a codeword in each symbol, resource mapping pattern configuration information indicating an arrangement manner of a frequency domain unit corresponding to a codeword in one or more symbols, and frequency hopping sequence configuration information indicating position information of a frequency domain unit corresponding to a codeword in a symbol. In this way, based on the configuration information, the terminal device can quickly and accurately map the at least one codeword of each symbol to the at least one frequency domain unit.

In some possible implementations, the configuration information further includes sparse configuration information used to perform sparse processing on a time domain codeword element in a symbol.

In some possible implementations, the at least one codeword corresponds to a plurality of layers, and the terminal device may map codewords corresponding to different layers to different frequency domain units.

In some possible implementations, the at least one codeword corresponds to a plurality of layers, and the terminal device may process a codeword corresponding to each layer, and map a processed codeword to the at least one frequency domain unit.

In some possible implementations, the configuration information further includes a frequency hopping pattern, and the terminal device may determine, based on a first matrix, a frequency hopping pattern corresponding to the at least one codeword. An element in the first matrix corresponds to one resource block, and when the element is a first character, the resource block corresponding to the element is an available resource block. The terminal device maps the at least one codeword in the same symbol to the at least one frequency domain unit based on the frequency hopping pattern corresponding to the at least one codeword, to obtain the frequency domain signal corresponding to the symbol.

According to a second aspect, a communication method is provided. The method may be performed by a network device, or may be performed by a component of the network device, such as a processor, a chip, or a chip system of the network device, or may be implemented by a logical module or software that can implement all or some functions of the network device. The following uses an example in which the method is performed by the network device for description. The communication method includes: The network device receives time domain signals corresponding to a plurality of symbols from a terminal device. A time domain signal corresponding to each symbol is determined based on a frequency domain signal corresponding to the symbol, and the frequency domain signal corresponding to the symbol is obtained by mapping at least one codeword in the symbol to at least one frequency domain unit. The at least one codeword includes at least one pilot codeword and/or at least one data codeword, different codewords are mapped to different frequency domain units, and there is a spacing between frequency domain units to which codeword elements included in a same codeword are mapped. The network device parses the time domain signal to obtain at least one codeword of each symbol.

In some possible implementations, a spacing between frequency domain units to which any adjacent pilot codeword elements are mapped is equal, and a spacing between frequency domain units to which any adjacent data codeword elements are mapped is equal. In other words, a codeword element included in a same codeword is mapped to at least one frequency domain unit in an equally spaced manner.

In some possible implementations, if the one codeword includes at least one pilot codeword and at least one data codeword, the at least one pilot codeword and the at least one data codeword are mapped to different frequency domain units.

In some possible implementations, the method further includes: The network device transmits, to the terminal device, configuration information used to map the at least one codeword of each symbol to the at least one frequency domain unit.

In some possible implementations, the configuration information includes one or more of resource configuration information indicating a frequency domain unit corresponding to a codeword in each symbol, resource mapping pattern configuration information indicating an arrangement manner of a frequency domain unit corresponding to a codeword in one or more symbols, and frequency hopping sequence configuration information indicating position information of a frequency domain unit corresponding to a codeword in a symbol. In this way, based on the configuration information, the terminal device can quickly and accurately map the at least one codeword of each symbol to the at least one frequency domain unit.

In some possible implementations, the configuration information further includes sparse configuration information used to perform sparse processing on a time domain codeword element in a symbol.

In some possible implementations, the at least one codeword corresponds to a plurality of layers, and codewords corresponding to different layers are mapped to different frequency domain units.

In some possible implementations, the at least one codeword includes the plurality of layers, and the frequency domain signal corresponding to the symbol is obtained by processing a codeword corresponding to each layer and then mapping a processed codeword to the at least one frequency domain unit.

In some possible implementations, the configuration information further includes a frequency hopping pattern, and the method further includes: The network device transmits a first matrix to a terminal. One element in the first matrix corresponds to one resource block. When an element is a first character, a resource block corresponding to the element is an available resource block. The frequency domain signal is obtained by mapping the at least one codeword to the at least one frequency domain unit based on a frequency hopping pattern corresponding to the at least one codeword.

According to a third aspect, a communication apparatus is provided. For beneficial effects, refer to the descriptions of the first aspect. Details are not described herein again. The communication apparatus has a function of implementing the behavior in the method embodiment in the first aspect. The function may be implemented by hardware, or may be implemented by hardware executing corresponding software. The hardware or the software includes one or more units corresponding to the foregoing functions. In a possible design, the communication apparatus includes: a transceiver module, configured to obtain a plurality of symbols, where each symbol includes at least one codeword, one codeword includes at least one pilot codeword and/or at least one data codeword, different codewords are mapped to different frequency domain units, and there is a spacing between frequency domain units to which codeword elements included in a same codeword are mapped; and a processing module, configured to map at least one codeword in a same symbol to at least one frequency domain unit, to obtain a frequency domain signal corresponding to the symbol. The processing module is further configured to process a frequency domain signal corresponding to each symbol, to obtain a time domain signal corresponding to the symbol. The transceiver module is further configured to transmit the time domain signal corresponding to each symbol to the network device.

In a possible implementation, a spacing between frequency domain units to which any adjacent pilot codeword elements are mapped is equal, and a spacing between frequency domain units to which any adjacent data codeword elements are mapped is equal. In other words, at least one codeword element may be mapped to at least one frequency domain unit in an equally spaced manner.

In a possible implementation, if the one codeword includes at least one pilot codeword and at least one data codeword, the at least one pilot codeword and the at least one data codeword are mapped to different frequency domain units.

In a possible implementation, the processing module is specifically configured to map the at least one codeword in the same symbol to the at least one frequency domain unit based on configuration information, to obtain the frequency domain signal corresponding to the symbol.

In some possible implementations, the configuration information includes one or more of resource configuration information indicating a frequency domain unit corresponding to a codeword in each symbol, resource mapping pattern configuration information indicating an arrangement manner of a frequency domain unit corresponding to a codeword in one or more symbols, and frequency hopping sequence configuration information indicating position information of a frequency domain unit corresponding to a codeword in a symbol. In this way, based on the configuration information, the terminal device can quickly and accurately map the at least one codeword of each symbol to the at least one frequency domain unit.

In some possible implementations, the configuration information further includes sparse configuration information used to perform sparse processing on a time domain codeword element in a symbol.

In some possible implementations, the at least one codeword corresponds to a plurality of layers, and the processing module is specifically configured to map codewords corresponding to different layers to different frequency domain units.

In some possible implementations, the at least one codeword corresponds to a plurality of layers, and the processing module is specifically configured to: process a codeword corresponding to each layer, and map a processed codeword to the at least one frequency domain unit.

In some possible implementations, the configuration information further includes a frequency hopping pattern, and the processing module is further configured to determine, based on a first matrix, a frequency hopping pattern corresponding to the at least one codeword. An element in the first matrix corresponds to one resource block, and when the element is a first character, the resource block corresponding to the element is an available resource block. The processing module is specifically configured to map the at least one codeword in the same symbol to the at least one frequency domain unit based on the frequency hopping pattern corresponding to the at least one codeword, to obtain the frequency domain signal corresponding to the symbol.

According to a fourth aspect, a communication apparatus is provided. For beneficial effects, refer to the descriptions of the second aspect. Details are not described herein again. The communication apparatus has a function of implementing the behavior in the method embodiment in the second aspect. The function may be implemented by hardware, or may be implemented by hardware executing corresponding software. The hardware or the software includes one or more units corresponding to the foregoing function. In a possible design, the communication apparatus includes the following modules. A transceiver module is configured to receive time domain signals corresponding to a plurality of symbols from a terminal device. A time domain signal corresponding to each symbol is determined based on a frequency domain signal corresponding to the symbol, and the frequency domain signal corresponding to the symbol is obtained by mapping at least one codeword in the symbol to at least one frequency domain unit. The at least one codeword includes at least one pilot codeword and/or at least one data codeword, different codewords are mapped to different frequency domain units, and there is a spacing between frequency domain units to which codeword elements included in a same codeword are mapped. A processing module is configured to parse the time domain signal to obtain at least one codeword of each symbol.

In some possible implementations, a spacing between frequency domain units to which any adjacent pilot codeword elements are mapped is equal, and a spacing between frequency domain units to which any adjacent data codeword elements are mapped is equal. In other words, a codeword element included in a same codeword is mapped to at least one frequency domain unit in an equally spaced manner.

In some possible implementations, if the one codeword includes at least one pilot codeword and at least one data codeword, the at least one pilot codeword and the at least one data codeword are mapped to different frequency domain units.

In some possible implementations, the transceiver module is further configured to transmit, to the terminal device, configuration information used to map the at least one codeword of each symbol to the at least one frequency domain unit.

In some possible implementations, the configuration information includes one or more of resource configuration information indicating a frequency domain unit corresponding to a codeword in each symbol, resource mapping pattern configuration information indicating an arrangement manner of a frequency domain unit corresponding to a codeword in one or more symbols, and frequency hopping sequence configuration information indicating position information of a frequency domain unit corresponding to a codeword in a symbol. In this way, based on the configuration information, the terminal device can quickly and accurately map the at least one codeword of each symbol to the at least one frequency domain unit.

In some possible implementations, the configuration information further includes sparse configuration information used to perform sparse processing on a time domain codeword element in a symbol.

In some possible implementations, the at least one codeword corresponds to a plurality of layers, and codewords corresponding to different layers are mapped to different frequency domain units.

In some possible implementations, the at least one codeword includes the plurality of layers, and the frequency domain signal corresponding to the symbol is obtained by processing a codeword corresponding to each layer and then mapping a processed codeword to the at least one frequency domain unit.

In some possible implementations, the configuration information further includes a frequency hopping pattern, and the transceiver module is further configured to transmit a first matrix to a terminal. One element in the first matrix corresponds to one resource block. When an element is a first character, the resource block corresponding to the element is an available resource block. The frequency domain signal is obtained by mapping the at least one codeword to the at least one frequency domain unit based on a frequency hopping pattern corresponding to the at least one codeword.

According to a fifth aspect, a communication apparatus is provided. The communication apparatus may be the terminal device in the foregoing method embodiments, or may be a chip disposed in the terminal device. The communication apparatus includes at least one processor. The processor is configured to execute a computer program or instructions stored in a memory, to enable the communication apparatus to perform the communication method according to the first aspect. The memory may be coupled to the processor, or may be independent of the processor. The communication apparatus may be the terminal device in the first aspect, or an apparatus included in the terminal device, for example, a chip.

In a possible implementation, the communication apparatus further includes the memory.

In a possible implementation, the communication apparatus further includes a communication interface.

According to a sixth aspect, a communication apparatus is provided. The communication apparatus may be the network device in the foregoing method embodiments, or may be a chip disposed in the network device. The communication apparatus includes at least one processor. The processor is configured to execute a computer program or instructions stored in a memory, to enable the communication apparatus to perform the communication method according to the second aspect. The memory may be coupled to the processor, or may be independent of the processor. The communication apparatus may be the network device in the second aspect, or an apparatus included in the network device, for example, a chip.

In a possible implementation, the communication apparatus further includes the memory.

In a possible implementation, the communication apparatus further includes a communication interface.

According to a seventh aspect, a computer-readable storage medium is provided. The computer-readable storage medium stores a computer program or instructions. When the computer program or the instructions are run on a communication apparatus, the communication apparatus may be enabled to perform the method according to the first aspect or the second aspect.

According to an eighth aspect, a computer program product including instructions is provided. When the computer program product is run on a communication apparatus, the communication apparatus may be enabled to perform the method according to the first aspect or the second aspect.

According to a ninth aspect, this application provides a chip system. The chip system includes a processor, configured to implement functions of the terminal device or the network device in the methods in the foregoing aspects. In a possible design, the chip system further includes a memory, configured to store program instructions and/or data. The chip system may include a chip, or may include a chip and another discrete component.

According to a tenth aspect, a communication system is provided. For beneficial effects, refer to the descriptions of the fifth aspect. Details are not described herein again. The communication system may include a network device and at least one terminal device.

The terminal device is configured to: obtain a plurality of symbols, where each symbol includes at least one codeword, and one codeword includes at least one pilot codeword and/or at least one data codeword; map at least one codeword in a same symbol to at least one frequency domain unit, to obtain a frequency domain signal corresponding to the symbol, where different codewords are mapped to different frequency domain units, and there is a spacing between frequency domain units to which codeword elements included in a same codeword are mapped; and process a frequency domain signal corresponding to each symbol to obtain a time domain signal corresponding to the symbol, and transmit the time domain signal corresponding to each symbol to a network device.

The network device is configured to: receive time domain signals corresponding to a plurality of symbols from at least one terminal, and parse each time domain signal to obtain at least one codeword of each symbol.

**BRIEF DESCRIPTION OF DRAWINGS**

FIG. 1 is a diagram of a frame structure according to an embodiment of this application;
FIG. 2A is a diagram of a structure of a transmission signal according to an embodiment of this application;
FIG. 2B is a diagram of a structure of another transmission signal according to an embodiment of this application;
FIG. 3 is a diagram of a transmission signal processing method according to an embodiment of this application;
FIG. 4 is a diagram of another transmission signal processing method according to an embodiment of this application;
FIG. 5 is a diagram of a codeword mapping method according to an embodiment of this application;
FIG. 6 is a diagram of a structure of a sparse pattern according to an embodiment of this application;
FIG. 7 is a diagram of a structure of a time-frequency signal according to an embodiment of this application;
FIG. 8 is a diagram of a structure of a communication apparatus according to an embodiment of this application;
FIG. 9 is a diagram of an architecture of another communication system according to an embodiment of this application;
FIG. 10 is a diagram of a structure of a communication apparatus according to an embodiment of this application;
FIG. 11 is a diagram of a symbol mapping method according to an embodiment of this application;
FIG. 12A is a diagram of another symbol mapping method according to an embodiment of this application;
FIG. 12B is a diagram of another symbol mapping method according to an embodiment of this application;
FIG. 13 is a schematic flowchart of a communication method according to an embodiment of this application;
FIG. 14 is a diagram of a structure of a frequency hopping pattern according to an embodiment of this application;
FIG. 15 is a schematic flowchart of another communication method according to an embodiment of this application;
FIG. 16 is a diagram of a symbol mapping method according to an embodiment of this application;
FIG. 17 is a diagram of another symbol mapping method according to an embodiment of this application;
FIG. 18 is a diagram of a structure of a time-frequency signal according to an embodiment of this application;
FIG. 19 is a diagram of a structure of a frequency hopping pattern according to an embodiment of this application;
FIG. 20 is a diagram of a structure of a time-frequency signal according to an embodiment of this application;
FIG. 21 is a diagram of still another symbol mapping method according to an embodiment of this application;
FIG. 22 is a diagram of yet another symbol mapping method according to an embodiment of this application;
FIG. 23 is a diagram of a time-frequency signal processing method according to an embodiment of this application;
FIG. 24 is a diagram of a simulation result according to an embodiment of this application;
FIG. 25 is a diagram of an architecture of another communication apparatus according to an embodiment of this application; and
FIG. 26 is a diagram of an architecture of still another communication apparatus according to an embodiment of this application.

**DESCRIPTION OF EMBODIMENTS**

Before embodiments of this application are described, related technical terms in embodiments of this application are explained and described. It should be noted that these explanations and descriptions are intended to facilitate understanding of embodiments of this application, and should not be construed as any limitation on the protection scope claimed in embodiments of this application.

In a wireless communication system, multiplexing for a plurality of users on resources such as time domain, frequency domain, or spatial domain resources is an issue that needs to be carefully considered. In an existing LTE or NR system, resources such as time domain, frequency domain, or spatial domain resources are allocated to users by using an orthogonal multiple access scheme (for example, an orthogonal frequency division multiplexing (orthogonal frequency division multiplexing, OFDM) scheme), so that each user can exclusively occupy a specific frequency domain, time domain, or spatial domain resource.

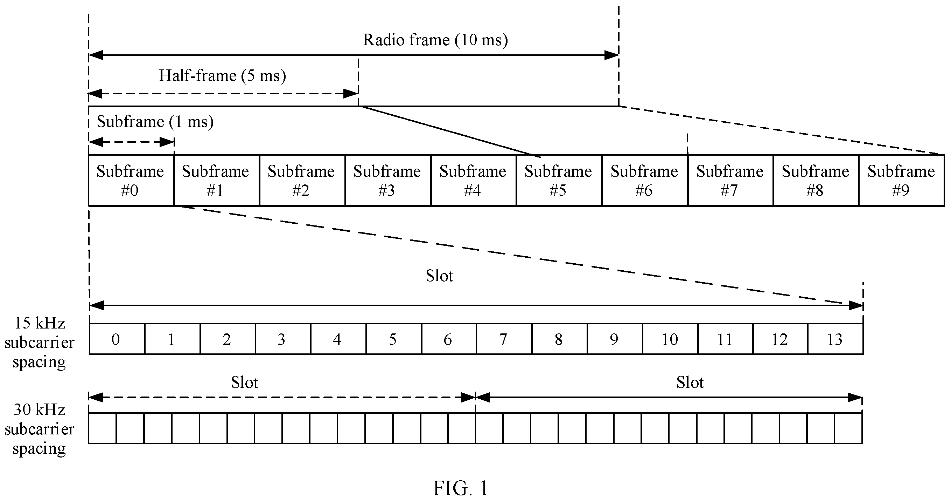

The NR system is used as an example. A frame structure of the NR system is provided by the 3rd Generation Partnership Project (3rd generation partnership project, 3GPP) TS 38.211, and includes a time domain resource and a frequency domain resource. FIG. 1 shows a structure of a radio frame of an NR frame structure on a time domain resource according to an embodiment of this application. As shown in FIG. 1, a length of an NR radio frame is defined to be 10 milliseconds (ms), one radio frame includes 10 subframes, and a length of each subframe is 1 ms. One subframe is further divided into a plurality of slots, and a specific quantity of the slots depends on a subcarrier spacing. Regardless of a size of the subcarrier spacing, one slot includes 14 OFDM symbols. A quantity of slots included in one subframe is related to a subcarrier spacing of the subframe. A larger subcarrier spacing indicates a shorter length of a slot. As shown in FIG. 1, there are subcarrier spacings of 15 kilohertz (kHz) and 30 kHz.

For a frequency domain resource of the radio frame, 12 contiguous subcarriers may be defined as one physical resource block (physical resource block, PRB). A larger subcarrier spacing indicates a larger actual bandwidth corresponding to a PRB. The PRB is a basic unit for allocating resources in frequency domain.

In the NR system, to facilitate channel estimation between a network device and a terminal device, a demodulation reference signal (demodulation reference signal, DMRS) may be configured in a slot, and channel estimation is performed by using the DMRS. The DMRS may be referred to as a pilot signal or a pilot codeword, and a configuration manner of the DMRS signal varies depending on different scenarios.

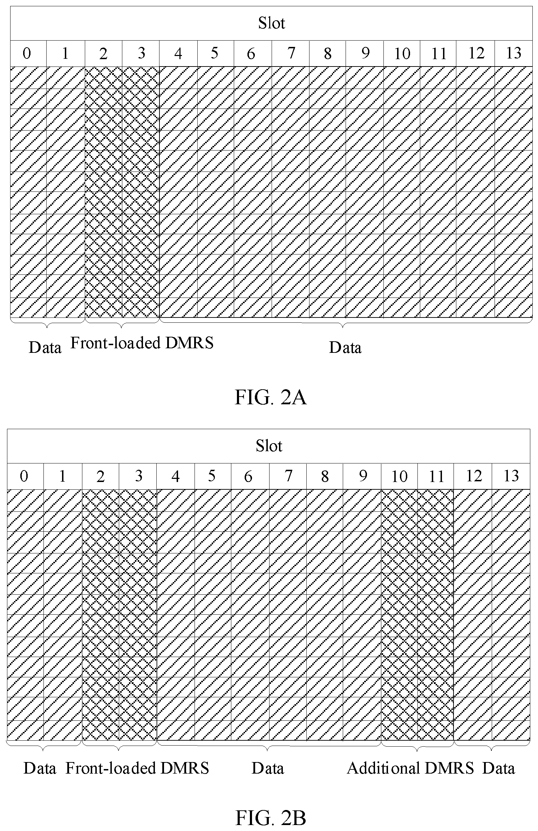

In an example, the network device may configure a DMRS at a front position of transmitted data, to obtain a transmission signal shown in FIG. 2A. The transmission signal includes the DMRS (which may be referred to as a front-loaded DMRS). After receiving the transmission signal, the terminal device may first parse the transmission signal to obtain the front-loaded DMRS, perform channel estimation based on the front-loaded DMRS to determine channel state information of a channel for receiving data, and then receive the data based on the channel state information obtained through estimation.

In another example, to adapt to fast-changing channel state information and support more accurate demodulation, the network device may configure an additional DMRS, that is, configure another DMRS (which may be referred to as an additional DMRS) based on FIG. 2A, to obtain a transmission signal shown in FIG. 2B. The transmission signal includes the front-loaded DMRS and the additional DMRS. After receiving the transmission signal, the terminal device may receive data based on channel state information obtained by performing channel estimation based on the front-loaded DMRS and the additional DMRS. In this way, a problem is avoided that fast channel changes cause a high error probability when the terminal device decodes data.

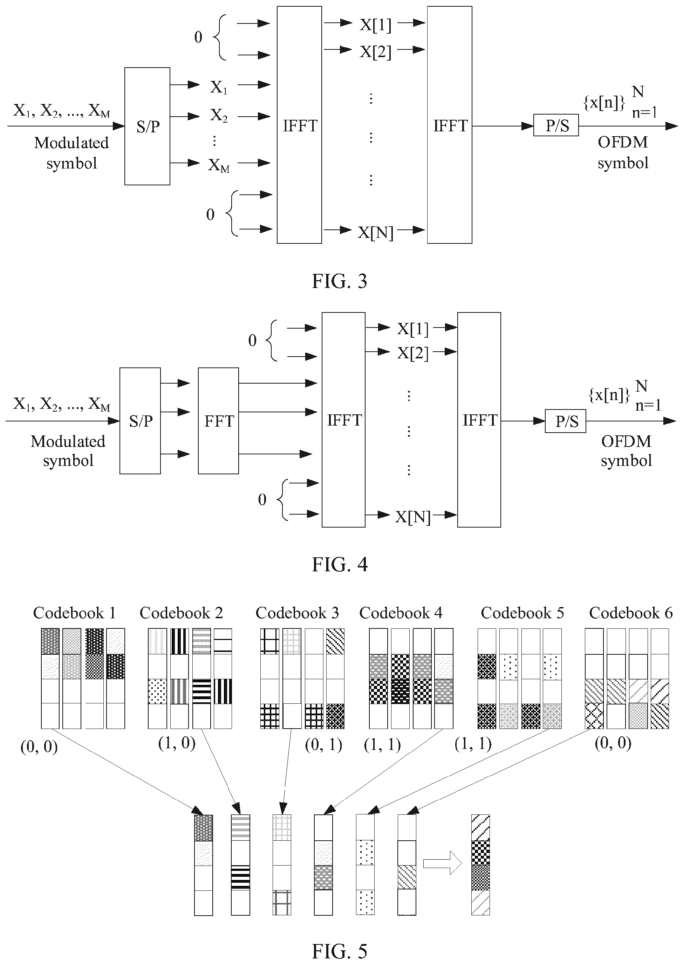

Based on the foregoing frame structure of the NR system, as shown in FIG. 3, when the network device transmits a codeword (for example, a data codeword (or referred to as data) or a pilot codeword) to the terminal device, the codeword is modulated to obtain modulated symbols. The modulated symbols are subjected to operations such as serial-to-parallel conversion (S/P) and frequency domain carrier mapping, and then subjected to processing such as inverse discrete Fourier transform (inverse discrete Fourier transform, IDFT)/inverse fast Fourier transform (inverse fast Fourier transform, IFFT), parallel-to-serial conversion (P/S), and prefix CP addition, so that a transmitted signal (or referred to as a time domain transmitted signal) of a cyclic prefix OFDM (cyclic prefix OFDM, CP-OFDM) waveform can be obtained. In the transmitted signal of the CP-OFDM waveform, due to superposition of a large quantity of modulated carriers in the transmitted signal, instantaneous power of the transmitted signal varies greatly, and a peak-to-average power ratio (peak to average power ratio, PAPR) (peak-to-average ratio, namely, a ratio of peak power to average power of a time domain signal) of the time domain transmitted signal is high.

To reduce the PAPR of the time domain transmitted signal, as shown in FIG. 4, a single-carrier DFT-s-OFDM waveform is introduced in an NR protocol, and may be considered as an OFDM waveform based on discrete Fourier transform (discrete Fourier transform, DFT) precoding. That is, FFT precoding is performed before IFFT is performed on a transmitted codeword. After the DFT/FFT precoding, a single-carrier signal is to be transmitted in time domain, and therefore a PAPR of the signal can be effectively reduced.

In the orthogonal multiple access scheme, pilots are concentrated on a plurality of specific OFDM symbols, which is not conducive to channel estimation for a channel fast changing on each OFDM symbol in a high-speed movement scenario. In addition, absence of a sparse design for data and pilot parts results in a large quantity of user terminals simultaneously accessing communication resources such as time domain resources and frequency domain resources, which aggravates multiple access interference.

For example, with continuous popularization of applications such as the Internet of Things, a quantity of terminal devices accessing a wireless network increases exponentially. In the context of limited spectrum and other communication resources, a non-orthogonal multiple access scheme needs to be considered. That is, a plurality of terminal devices share same resources such as time domain, frequency domain, or spatial domain resources in a communication process. In non-orthogonal multiple access, communication resource sharing may lead to a problem of interference between a plurality of terminal devices (that is, multiple access interference). How to handle the multiple access interference is an issue that needs to be carefully considered in a multi-terminal-device communication system. In addition, future 6th generation (6th generation, 6G) communication further needs to meet unique requirements and even extreme requirements of various applications. Therefore, a scalable non-orthogonal multiple access framework needs to be designed. The framework can adapt to different packet sizes, quantities of access terminal devices, and coverage levels of terminal devices, and can enable the transmitted signal to have a low PAPR characteristic, to meet different requirements on rate, latency, reliability, and network coverage in diversified service application scenarios.

To resolve multiple access interference, for example, a non-orthogonal multiple access scheme of sparse code multiple access (sparse code multiple access, SCMA) may be used. The following describes SCMA. SCMA is a code-domain non-orthogonal multiple access technique. In the SCMA, resource mapping for each terminal device in a frame is indicated by a sparse signature sequence. For example, all six possible signature sequences S of length N=4 and sparsity $\rho$=1/2 are shown as follows. One signature sequence corresponds to data in one OFDM symbol, one signature sequence correspondingly indicates four subcarriers, and 0 and 1 in the signature sequence indicate whether data is transmitted on a corresponding subcarrier.

$$S = \left\{ \begin{bmatrix} 1 \\ 1 \\ 0 \\ 0 \end{bmatrix} \begin{bmatrix} 1 \\ 0 \\ 1 \\ 0 \end{bmatrix} \begin{bmatrix} 1 \\ 0 \\ 0 \\ 1 \end{bmatrix} \begin{bmatrix} 0 \\ 1 \\ 1 \\ 0 \end{bmatrix} \begin{bmatrix} 0 \\ 1 \\ 0 \\ 1 \end{bmatrix} \begin{bmatrix} 0 \\ 0 \\ 1 \\ 1 \end{bmatrix} \right\}$$
Signature sequence 1  Signature sequence 2  Signature sequence 3  Signature sequence 4  Signature sequence 5  Signature sequence 6

It is assumed that a frequency domain resource of the NR system includes N=4 subcarriers. When the signature sequence 1 is configured for the terminal device, it indicates that the terminal device selects only the first two subcarriers from the four subcarriers to transmit data. Similarly, when the signature sequence 3 is configured for the terminal device, it indicates that the terminal device selects a subcarrier 1 and a subcarrier 3 to transmit data. The sparse signature sequence in the SCMA can reduce a quantity of interfering terminal devices on a unit resource. For example, it is assumed that the system includes six access terminal devices, and each terminal device is allocated a different signature sequence. As shown in FIG. 5, each signature sequence corresponds to four different codebooks (or high-dimensional constellation points), and the terminal device selects a corresponding codeword based on a mapping relationship between information bits of the terminal device. Due to a sparsity of the signature sequence, a quantity of terminal devices superposed on a unit subcarrier may be reduced from 6 to 3.

In the SCMA, despite introduction of the concept of the sparse signature sequence, there is still no related design for aspects such as a sparsity in a sparse frame structure, pilot and data resource mapping positions, and a low PAPR of a time domain transmitted signal. Therefore, specific requirements in different communication scenarios cannot be supported. For example, future 6G communication further needs to meet unique requirements and even extreme requirements of various applications. Therefore, a scalable non-orthogonal multiple access framework needs to be designed. The framework can adapt to specific requirements in different communication scenarios, for example, different packet sizes, quantities of access users, and user coverage levels, and can enable the transmitted signal to have a PAPR characteristic, to meet different requirements on rate, latency, reliability, and network coverage in diversified service application scenarios.

For example, to reduce a PAPR of a non-orthogonal multiple access system such as the SCMA, a preprocessing module is introduced, to reduce a PAPR of a signal by performing some preprocessing on a transmitted codeword. The preprocessing module may include performing DFT precoding (similar to a DFT-s-OFDM waveform) on a codeword or predefining some low PAPR mapping functions. Table 1 shows three low PAPR mapping functions with a sequence length of 4.

Table 1

| Sequence index (Sequence index) | 1 | 2 | 3 | 4 |
|---|---|---|---|---|
| Corresponding bit sequence (Corresponding bit sequence) | 00 | 01 | 10 | 11 |
| Output symbol sequence (Output symbol sequence) | $\begin{matrix} 1 \\ 1 \\ 1 \\ 1 \end{matrix}$ | $\begin{bmatrix} 1 \\ -j \\ -1 \\ j \end{bmatrix}$ | $\begin{bmatrix} -1 \\ j \\ 1 \\ -j \end{bmatrix}$ | $\begin{bmatrix} -1 \\ -1 \\ -1 \\ -1 \end{bmatrix}$ |

(continued)

| Sequence index (Sequence index) | 1 | 2 | 3 | 4 |
|---|---|---|---|---|
| Sequence index | 1 | 2 | 3 | 4 |
| Corresponding bit sequence | 00 | 01 | 10 | 11 |
| Output symbol sequence | $\begin{bmatrix} 1 \\ 1 \\ 1 \\ 1 \end{bmatrix}$ | $\begin{bmatrix} 1 \\ j \\ -1 \\ -j \end{bmatrix}$ | $\begin{bmatrix} -1 \\ -j \\ 1 \\ j \end{bmatrix}$ | $\begin{bmatrix} -1 \\ -1 \\ -1 \\ -1 \end{bmatrix}$ |
| Sequence index | 1 | 2 | 3 | 4 |
| Corresponding bit sequence | 00 | 01 | 10 | 11 |
| Output symbol sequence | $\begin{bmatrix} 1 \\ j \\ -1 \\ -j \end{bmatrix}$ | $\begin{bmatrix} 1 \\ -j \\ -1 \\ j \end{bmatrix}$ | $\begin{bmatrix} -1 \\ j \\ 1 \\ -j \end{bmatrix}$ | $\begin{bmatrix} -1 \\ -j \\ 1 \\ j \end{bmatrix}$ |

Although the foregoing method of adding the preprocessing module can reduce the PAPR of the signal through preprocessing, the following problem still exists: After preprocessing based on an operation such as DFT is performed on an original transmitted signal, the transmitted signal no longer has a sparsity in frequency domain. Consequently, the sparsity of the frame structure cannot be flexibly controlled. In addition, the foregoing method of adding the preprocessing module includes only a design for the data codeword, without considering a low PAPR design for a pilot and data joint signal.

Therefore, to implement a flexible and configurable sparse frame structure, data communication in a plurality of scenarios such as high-speed and low-speed movement is supported, and random dispersion of data and pilots in the frame structure is considered, to randomize interference between users. In an example, a flexible and configurable sparse frame structure resource mapping scheme is proposed. In this scheme, the sparse frame structure includes two levels: a basis matrix (a first level) and a sparse subgraph (a second level).

The basis matrix is a binary matrix. The basis matrix may include a plurality of elements, and values of the plurality of elements may be 1 or 0. The element 1 indicates that a data symbol or a pilot symbol is transmitted in a corresponding time-frequency resource area. The element 0 indicates that a corresponding time-frequency area is idle. A sparsity $\rho$ of the basis matrix is a ratio of a quantity of elements 1 in the matrix to a quantity of all elements in the matrix. For example, when the matrix is a $6\times7$ matrix, a basis matrix of $\rho=3/6$ may be:

$$B_{6\times7} = \begin{bmatrix} 0 & 1 & 0 & 1 & 0 & 1 & 0 \\ 1 & 0 & 1 & 0 & 1 & 0 & 1 \\ 1 & 1 & 0 & 0 & 1 & 0 & 0 \\ 0 & 0 & 1 & 1 & 0 & 1 & 0 \\ 1 & 1 & 0 & 1 & 1 & 1 & 1 \\ 0 & 0 & 1 & 0 & 0 & 0 & 1 \end{bmatrix}$$

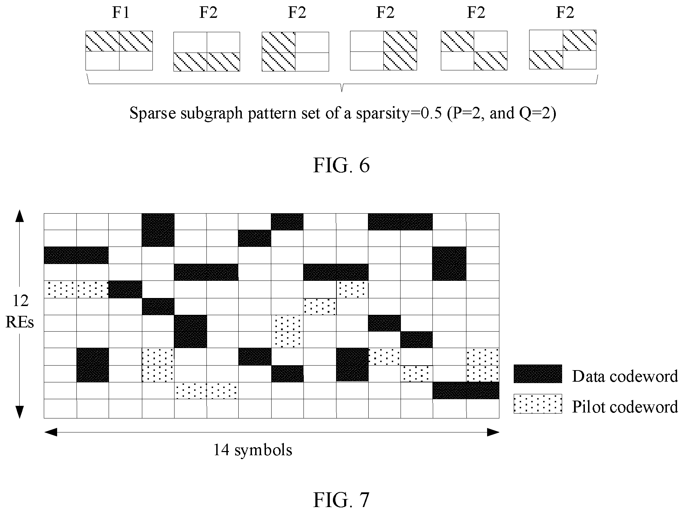

The sparse subgraph is a mapping pattern of pilot symbols or data symbols in a time-frequency resource area represented by the element "1" in the basis matrix, and includes a total of $P \times Q$ time-frequency resources. P and Q are positive integers. The terminal device maps the data symbols or the pilot symbols on $R \leq P \times Q$ time-frequency resources, and the remaining resources are idle. A sparsity of the sparse subgraph is defined as $\rho = R/(P \times Q)$. For example, when $P = Q = 2$, a sparse subgraph pattern set of $\rho = 0.5$ may be shown in FIG. 6. In FIG. 6, a blank area of the sparse subgraph indicates that a time-frequency resource in the area is idle, while a time-frequency resource in another area is used to transmit data or a pilot. With reference to the foregoing basis matrix and a plurality of sparse subgraph patterns in FIG. 6, a sparse frame structure shown in FIG. 7 may be obtained.

In the foregoing scheme based on the basis matrix and the sparse subgraph pattern set, an overall sparsity of the frame structure may be flexibly configured by adjusting respective sparsities of the basis matrix and the sparse subgraph. In addition, a time-frequency resource is randomly divided into a pilot resource or data resource area at a granularity of a size of a sparse subgraph, so that a technical effect of random dispersion of pilot and data symbols in a frame structure can be implemented, and data communication in a high-speed movement scenario is supported. However, because a frequency hopping pattern of the sparse frame structure is irregular, in each OFDM symbol, both positions and a quantity of carriers into which pilots and data are inserted are random. In this case, instantaneous power of a time domain transmitted signal obtained by superposing the pilots and the data after IFFT transform changes greatly, leading to a high PAPR of the time domain transmitted signal.

To resolve the problem of a high PAPR of a time domain transmitted signal caused by sparse design of data and pilot parts, an embodiment of this application provides a communication method, to design a pilot and data hybrid frame structure with a low PAPR characteristic. The method may include: A terminal device obtains at least one OFDM symbol (or referred to as a symbol), where one OFDM symbol includes at least one pilot codeword and/or at least one data codeword. For any OFDM symbol, the terminal device maps at least one pilot codeword and/or at least one data codeword in the symbol to different frequency domain units, to obtain a frequency domain signal corresponding to the symbol. Further, the terminal device may process a frequency domain signal corresponding to each symbol, to obtain a time domain signal (or referred to as a time domain transmitted signal) corresponding to the symbol. In this way, the terminal device may transmit the time domain signal corresponding to each symbol to a network device.

It may be understood that the at least one codeword may correspond to at least one transmission layer (or referred to as a layer (layer)). The OFDM symbol may include one or more layers. The at least one pilot codeword and/or the at least one data codeword may include the following two cases.

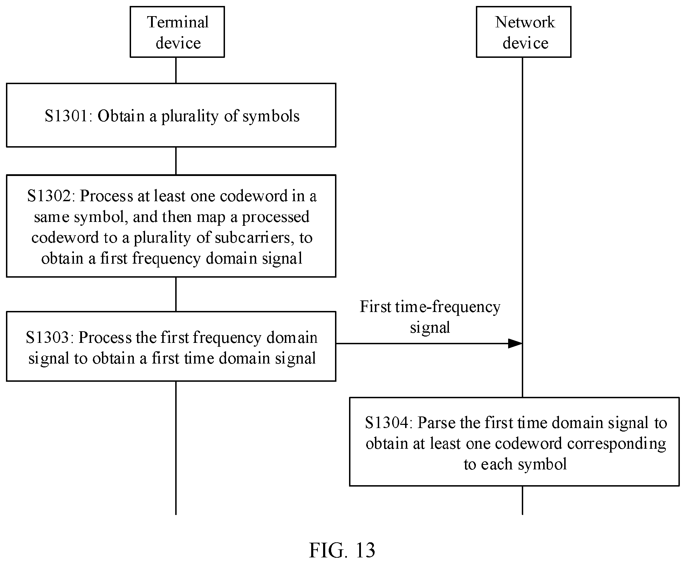

In a scenario in which the OFDM symbol includes one layer, the OFDM symbol includes at least one pilot codeword or at least one data codeword, and the at least one pilot codeword or the at least one data codeword corresponds to one layer. The scenario may be referred to as a single-layer communication scenario. Specifically, a communication process in this application scenario is shown in FIG. 13.

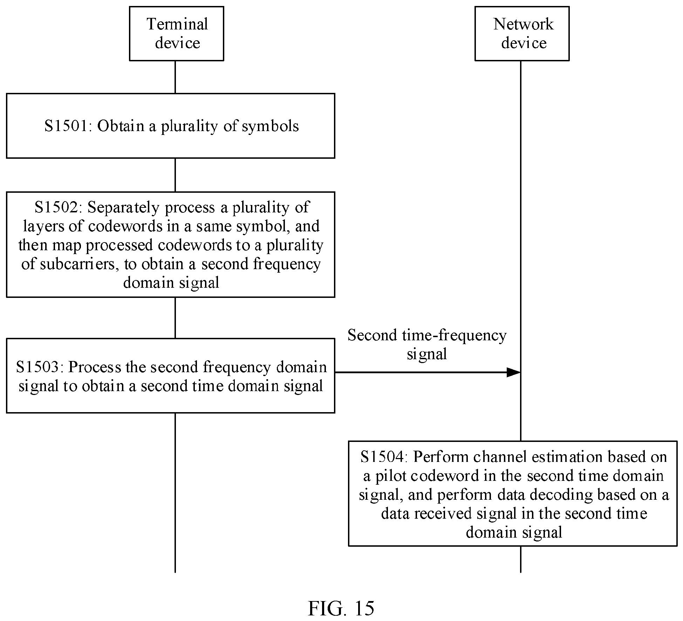

In a scenario in which the OFDM symbol includes a plurality of layers, the OFDM symbol includes a plurality of layers, and one layer may correspond to at least one pilot codeword or at least one data codeword. The application scenario may be referred to as a multi-layer communication scenario. Specifically, a communication process in this application scenario is shown in FIG. 15.

Based on the method, when at least one codeword exists in one OFDM symbol, a time domain signal corresponding to the at least one codeword has a low PAPR characteristic. In addition, a device in a network in embodiments of this application may flexibly configure parameters such as a frame structure sparsity and pilot and data resource mapping positions as required. In addition, a sparse frame structure further has a low PAPR characteristic of a time domain transmitted signal, enables data communication of users at different coverage levels, and supports specific requirements in different communication scenarios.

The following describes the methods provided in embodiments of this application with reference to the accompanying drawings of this specification.

Embodiments of this application may be applied to a 5G NR system, or may be applied to another communication system such as a next generation (6G) communication system, provided that an entity in the communication system transmits configuration information to another entity, and transmits data to the another entity, or receives data transmitted by the another entity; and the another entity receives the configuration information, and transmits the data to the configuration information transmitting entity based on the configuration information, or receives the data transmitted by the configuration information transmitting entity.

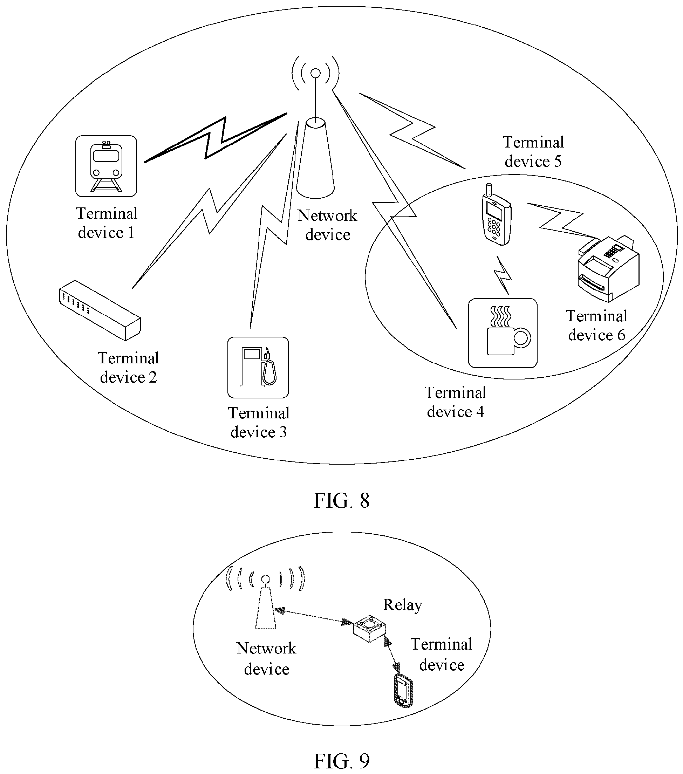

For example, as shown in FIG. 8, when the configuration information transmitting entity is a network device, and the configuration information receiving entity is a terminal device, the network device and a terminal device 1 to a terminal device 6 form a communication system. In the communication system, the terminal device 1 to the terminal device 6 may transmit uplink data to a network device, and the network device needs to receive the uplink data transmitted by the terminal device 1 to the terminal device 6. Besides, the network device may transmit configuration information to the terminal device 1 to the terminal device 6.

In addition, a terminal device 4 to the terminal device 6 may also form a communication system. In this case, both the configuration information transmitting entity and the configuration information receiving entity may alternatively be terminal devices. For example, in an Internet of Vehicles system, the terminal device 1 transmits configuration information to a terminal device 2, and receives data transmitted by the terminal device 2. The terminal device 2 receives the configuration information transmitted by the terminal device 1, and transmits the data to the terminal device 1.

Embodiments of this application may be further applied to a communication system shown in FIG. 9. The communication system may be a single-hop (Single-hop) or multi-hop (Multi-hop) relay system that includes a relay node, as shown in FIG. 9. A form of a relay may be a small cell, an integrated access and backhaul (integrated access and backhaul, IAB) node, a distributed unit (distributed unit, DU), a terminal, a transmitter and receiver point (transmitter and receiver point, TRP), or the like.

It should be noted that FIG. 8 and FIG. 9 are only example framework diagrams. A quantity of nodes included in FIG. 8 and FIG. 9 is not limited. For example, more terminals may be included, and in addition to the functional nodes shown in FIG. 8 and FIG. 9, other nodes may be further included, for example, a core network device, a gateway device, and an application server. This is not limited.

The following describes network elements in the systems shown in FIG. 8 and FIG. 9.

The network device is mainly configured to implement functions such as resource scheduling, radio resource management, and radio access control of the terminal. Specifically, the network device may be any node in a small cell, a wireless access point, a TRP, a transmission point (transmission point, TP), or another access node. In embodiments of this application, an apparatus configured to implement a function of the network device may be a network device, or may be an apparatus that can support the network device in implementing the function, for example, a chip system (such as a chip, or a processing system including a plurality of chips) or a modem (modem). The following describes the method provided in embodiments of this application by using an example in which the apparatus for implementing the function of the network device is the network device.

The terminal device may be a terminal, user equipment (user equipment, UE), a mobile station (mobile station, MS), a mobile terminal (mobile terminal, MT), or the like. Specifically, the terminal device may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home device, an in-vehicle terminal, or the like. In embodiments of this application, an apparatus configured to implement a function of the terminal device may be a terminal device, or may be an apparatus that can support the terminal device in implementing the function, for example, a chip system (such as a chip, a processing system including a plurality of chips) or a modem. The following describes the communication method provided in embodiments of this application by using an example in which the apparatus for implementing the function of the terminal is the terminal.

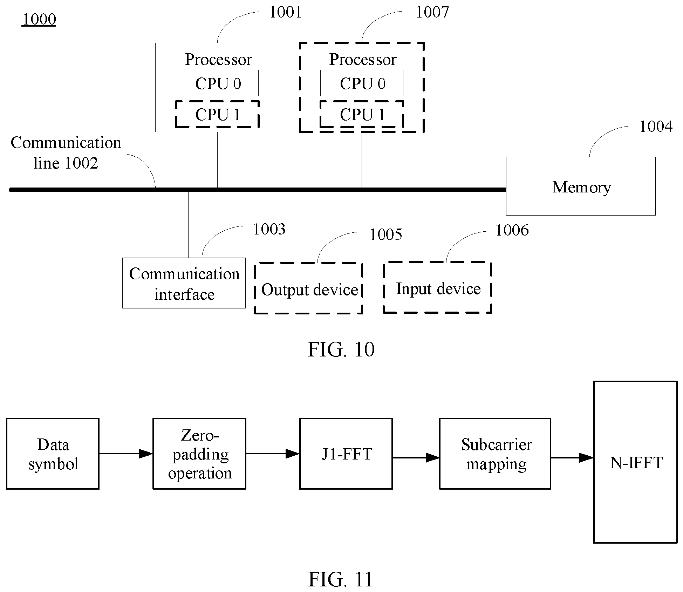

During specific implementation, the devices shown in FIG. 8 or FIG. 9, such as the network device and the terminal device, may use a composition structure shown in FIG. 10, or include components shown in FIG. 10. FIG. 10 is a composition diagram of a communication apparatus 1000 according to an embodiment of this application. The communication apparatus 1000 may include a processor 1001 and a memory 1004. Further, the communication apparatus 1000 may further include a communication line 1002 and a communication interface 1003. The processor 1001, the memory 1004, and the communication interface 1003 may be connected to each other through the communication line 1002.

The processor 1001 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1001 may alternatively be another apparatus having a processing function, for example, a circuit, a component, or a software module. This is not limited.

The communication line 1002 is configured to transfer information between components included in the communication apparatus 1000.

The communication interface 1003 is configured to communicate with another device or another communication network. The another communication network may be an Ethernet, a radio access network (radio access network, RAN), a wireless local area network (wireless local area network, WLAN), or the like. The communication interface 1003 may be a module, a circuit, a transceiver, or any apparatus that can implement communication.

The memory 1004 is configured to store instructions. The instructions may be a computer program.

The memory 1004 may be a read-only memory (read-only memory, ROM) or another type of static storage device that can store static information and/or instructions; or may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital universal optical disc, and a Blu-ray optical disc), a magnetic disk storage medium, or another magnetic storage device. This is not limited.

It should be noted that the memory 1004 may exist independent of the processor 1001, or may be integrated with the processor 1001. The memory 1004 may be configured to store instructions, program code, some data, or the like. The memory 1004 may be located inside the communication apparatus 1000, or may be located outside the communication apparatus 1000. This is not limited.

The processor 1001 is configured to execute the instructions stored in the memory 1004, to implement a communication method provided in the following embodiments of this application. For example, when the communication apparatus 1000 is a first session management function network element, a chip in a first session management function network element, or a system on a chip, the processor 1001 executes the instructions stored in the memory 1004, to implement the steps performed by the first session management function network element in the following embodiments of this application. For another example, when the communication apparatus 1000 is an access network device, a chip in an access network device, or a system on a chip, the processor 1001 may execute the instructions stored in the memory 1004, to implement the steps performed by the access network device in the following embodiments of this application.

In an example, the processor 1001 may include one or more CPUs, for example, a CPU 0 and a CPU 1 in FIG. 10.

In an optional implementation, the communication apparatus 1000 includes a plurality of processors. For example, the communication apparatus 1000 may further include a processor 1007 in addition to the processor 1001 in FIG. 10.

In an optional implementation, the communication apparatus 1000 further includes an output device 1005 and an input device 1006. For example, the input device 1006 is a device such as a keyboard, a mouse, a microphone, or a joystick, and the output device 1005 is a device such as a display or a speaker (speaker).

It should be noted that the communication apparatus 1000 may be a desktop computer, a portable computer, a network server, a mobile phone, a tablet computer, a wireless terminal, an embedded device, a chip system, or a device having a structure similar to that in FIG. 10. In addition, the composition structure shown in FIG. 10 does not constitute a limitation on the communication apparatus. In addition to the components shown in FIG. 10, the communication apparatus may include more or fewer components than those shown in the figure, or some components may be combined, or there may be a different component arrangement.

In this embodiment of this application, the chip system may include a chip, or may include a chip and another discrete component.

In addition, actions, terms, and the like in embodiments of this application may be mutually referenced. This is not limited. In embodiments of this application, a name of a message exchanged between devices, a name of a parameter in a message, or the like is merely an example. Another name may alternatively be used during specific implementation. This is not limited.

The following describes the communication method provided in embodiments of this application with reference to the communication system shown in FIG. 8. Devices in the following embodiments may have the components shown in FIG. 10. In addition, actions, terms, and the like in embodiments may be mutually referenced. In embodiments, a name of a message exchanged between devices, a name of a parameter in a message, or the like is merely an example. Another name may alternatively be used during specific implementation. For example, in the following embodiments, "configuration" may be replaced by "setting" for description. This is uniformly described herein, and is not limited in embodiments of this application.

In an implementation, based on a single-layer communication scenario, for example, one symbol includes one layer of data codewords. A principle block diagram of the method may be shown in FIG. 11: Sparse processing (for example, a zero-padding operation) is performed on a data codeword, to obtain a corresponding sparse codeword. For example, a sparse codeword of a data symbol may be a sparse codeword $x = [x_1, x_2, ..., x_{J_1}]$ of length J1. That is, the sparse codeword includes $J_1$ codeword elements/symbols. The terminal device may perform $J_1$-point FFT transform on the sparse codeword $x$, to obtain a corresponding frequency domain symbol $X_i = \sum_{n=0}^{J_1-1} x_n \exp(-j2\pi ni/J_1)$, where i = 1, 2, $\cdots$, $J_1$. $J_1$ and n are positive integers. Then, the terminal device inserts, in an equally spaced manner, codeword elements/symbols included in the frequency domain codeword into a subcarrier, and performs N-point IFFT transform to obtain a time domain signal. A codeword element/symbol included in a pilot codeword may be referred to as a pilot codeword element/symbol, and a codeword element/symbol included in a data codeword may be referred to as a data codeword element/symbol.

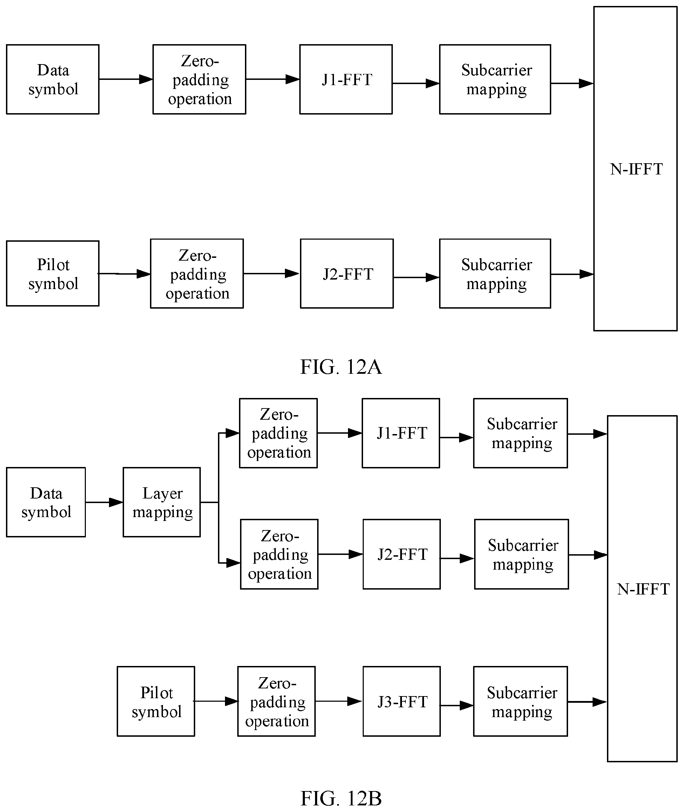

In another implementation, based on a multi-layer communication scenario, for example, one symbol includes a data codeword (also referred to as a data symbol) and a pilot codeword (also referred to as a pilot symbol). A principle block diagram of the method may be shown in FIG. 12A or FIG. 12B: Sparse processing (for example, a zero-padding operation) is separately performed on the data symbol and the pilot symbol, to obtain a respective corresponding sparse codeword. For example, a sparse codeword of a data symbol may be a sparse codeword $x = [x_1, x_2, ..., x_{J_1}]$ of length J1. The terminal device may perform $J_1$-point FFT transform on the sparse codeword $x$, to obtain a corresponding frequency domain codeword symbol $X_i = \sum_{n=0}^{J_1-1} x_n \exp(-j2\pi ni/J_1)$, where $i$ = 1, 2, ... ,$J_1$. Then, the terminal device inserts the frequency domain codeword symbol into a subcarrier in an equally spaced manner, and performs N-point IFFT transform to obtain a time domain signal. Similarly, same processing may also be performed on a pilot codeword symbol. A difference lies in that during the FFT transform, the pilot symbol uses $J_2$-point FFT transform. N is a quantity of sampling points of the time domain signal, and N is a positive integer greater than $J_1$.

A scenario in FIG. 12A means that one symbol includes one layer of data codewords and one layer of pilot codewords. A scenario in FIG. 12B means that one symbol includes a plurality of layers of data codewords and one layer of pilot codewords.

In this embodiment of this application, sparse processing is optional, and the terminal device may not perform sparse processing on the symbol.

The following describes the foregoing single-layer communication scenario in detail with reference to FIG. 13. FIG. 13 shows a communication method according to an embodiment of this application. As shown in FIG. 13, the method may include the following steps.

S1301: A terminal device obtains a plurality of symbols.

One symbol includes one layer, and the layer may include at least one pilot codeword or at least one data codeword. The pilot codeword may be replaced by pilot code for description, for example, may be the DMRS pilot described above. The data codeword may be replaced by data (data) for description, and is a symbol corresponding to the data.

In an example, at least one codeword may be distributed in one symbol in a sparse manner. The sparse manner may mean that there is a spacing between adjacent codeword elements/symbols in a same codeword. For example, a spacing between adjacent codeword elements/symbols may be 1, 2, or the like. A codeword length may be a quantity of codeword elements/symbols included in the codeword. For example, the codeword length may be 4, 6, 8, or the like.

For ease of description, at least one pilot codeword distributed in a sparse manner may be referred to as a sparse pilot, and at least one data codeword distributed in a sparse manner may be referred to as sparse data. A codeword length corresponding to a pilot codeword may be referred to as a length of a sparse pilot, and a codeword length corresponding to a digital codeword may be referred to as a length of sparse data.

For example, a length of a sparse pilot in one symbol and a length of sparse data in one symbol may be set based on a requirement. For example, the length may be pre-specified in a protocol, or may be configured by a network device for the terminal device. This is not limited.

For example, the network device may transmit configuration information to the terminal device through signaling (for example, radio resource control (radio resource control, RRC) signaling). The configuration information may include sparse configuration information. The sparse configuration information may be used to perform sparse processing on a time domain codeword in a symbol. For example, the configuration information may include a codeword length corresponding to a pilot codeword and a codeword length corresponding to a data codeword.

It may be understood that the symbol (symbol) described in this application may include an OFDM symbol and the like. That at least one pilot codeword and at least one data codeword are located in a same symbol may be understood as that on a time domain resource, the at least one pilot codeword and the at least one data codeword are located in a same OFDM symbol. In this case, from a perspective of the time domain resource, the at least one pilot codeword located in the OFDM symbol may be referred to as a pilot time domain signal, and the at least one data codeword located in the OFDM symbol may be referred to as a data time domain signal.

Certainly, in this embodiment of this application, the codeword element/symbol included in the pilot codeword in the symbol and the codeword element/symbol included in the data codeword in the symbol may not be sparsely processed.

S1302: The terminal device processes at least one codeword in a same symbol, and then maps a processed codeword to a plurality of subcarriers, to obtain a first frequency domain signal.

Different codewords are mapped to different subcarriers, and there is a spacing between subcarriers to which codeword elements/symbols included in a same codeword are mapped.

The first frequency domain signal may include a frequency domain signal corresponding to the codeword. For example, if the at least one codeword is a pilot codeword, the first frequency domain signal includes a pilot frequency domain signal. If the at least one codeword is a data codeword, the first frequency domain signal includes a data frequency domain signal.

Specifically, that the terminal device processes the at least one codeword in the same symbol and maps the processed codeword to at least one subcarrier may mean that the terminal device separately performs FFT processing on the at least one codeword, and maps at least one processed codeword to the at least one subcarrier in a spaced manner, to obtain the first frequency domain signal. Different codewords may be spaced in an equally spaced manner or in an unequally spaced manner. Codeword elements/symbols included in a same codeword are spaced in an equally spaced manner.

In a possible implementation, the terminal device may map the at least one codeword in the same symbol to the plurality of subcarriers based on the configuration information, to obtain the first frequency domain signal. The configuration information may be preset by the terminal device, or may be obtained by the terminal device from the network device. This is not limited.

The configuration information may include one or more of resource configuration information, resource mapping pattern configuration information, and frequency hopping sequence configuration information. The resource configuration information indicates a frequency domain unit corresponding to a codeword in each symbol. The resource mapping pattern configuration information indicates an arrangement manner of a frequency domain unit corresponding to a codeword in one or more symbols. The frequency hopping sequence configuration information indicates position information of a frequency domain unit corresponding to a codeword in a symbol. Certainly, the configuration information may further include other information, for example, may further include the sparse configuration information. The sparse configuration information may indicate to perform sparse processing (that is, a zero-padding operation) on a time domain codeword element/symbol in a symbol.

In an example, the terminal device may map the at least one codeword in the same symbol to the plurality of subcarriers based on resource configuration information, to obtain the first frequency domain signal.

For example, the resource configuration information may include an identifier of a subcarrier corresponding to at least one codeword in each symbol. Different subcarriers have different identifiers. In this way, the terminal device may map the at least one processed codeword to the plurality of subcarriers based on an identifier of a subcarrier corresponding to the at least one codeword, to obtain the first frequency domain signal.

For another example, the resource configuration information may further include a start position of the at least one codeword in the plurality of subcarriers or a subcarrier corresponding to a $1^{st}$ codeword in the at least one codeword. In this way, the terminal device may map the at least one codeword to the plurality of subcarriers based on the start position or the subcarrier corresponding to the $1^{st}$ codeword in the at least one codeword, to obtain the first frequency domain signal.

In another example, the terminal device may map the at least one codeword in the same symbol to the plurality of subcarriers based on the resource mapping pattern configuration information, to obtain the first frequency domain signal.

The resource mapping pattern configuration information may include a plurality of frequency hopping patterns. Each frequency hopping pattern may include a plurality of pattern units, and there is a spacing between the plurality of pattern units. A quantity of pattern units included in the frequency hopping pattern is less than or equal to a quantity of subcarriers.

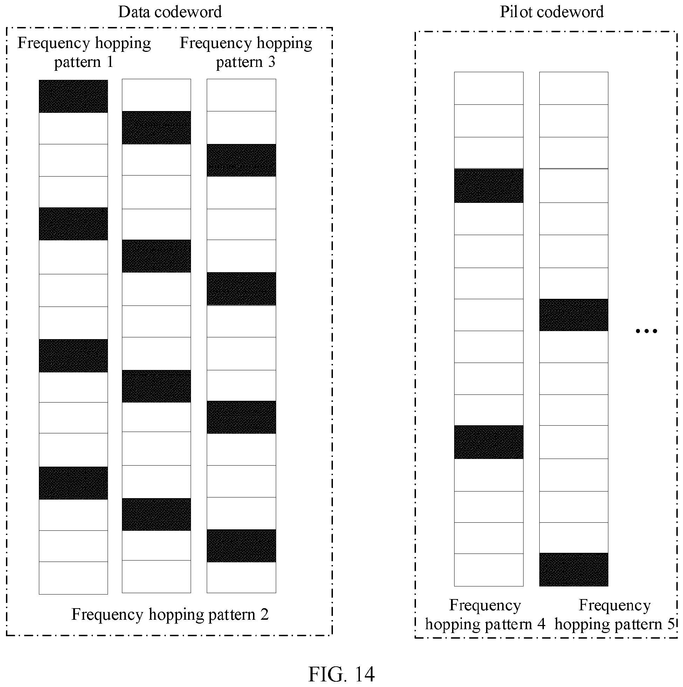

For example, FIG. 14 shows a plurality of frequency hopping patterns. The plurality of frequency hopping patterns may include a plurality of frequency hopping patterns (a frequency hopping pattern 1 to a frequency hopping pattern 3) corresponding to the data codeword and frequency hopping patterns (a frequency hopping pattern 4 and a frequency hopping pattern 5) corresponding to the pilot codeword. In FIG. 14, a filled square indicates position information of a subcarrier to which a codeword is mapped, and a blank square indicates a spacing.

Based on the plurality of frequency hopping patterns shown in FIG. 14, the terminal device may accurately map the at least one codeword in each symbol to the plurality of subcarriers.

Further, for a plurality of symbols that all include one layer, the terminal device may further determine a frequency hopping pattern corresponding to a codeword in each symbol. A frequency hopping pattern corresponding to each layer may be the same or may be different. The terminal device maps a corresponding symbol to the plurality of subcarriers based on a frequency hopping pattern corresponding to each symbol, to obtain the first frequency domain signal.

In still another example, the terminal device may map at least one codeword in different symbols to the plurality of subcarriers based on the frequency hopping sequence configuration information, to obtain the first frequency domain signal.

The frequency hopping sequence configuration information may include a frequency hopping sequence. The frequency hopping sequence may be generated according to a method of Euclidean geometry.

For example, with reference to FIG. 14, different frequency hopping patterns may be selected for different symbols. For example, an OFDM symbol n may correspond to a frequency hopping pattern 1, an OFDM symbol n+1 may correspond to a frequency hopping pattern 2, and an OFDM symbol n+2 may correspond to a frequency hopping pattern 3. In this way, randomness of a sparse pattern in a frame structure can be increased.

It may be understood that this application is described by using an example in which frequency domain resource division is performed by using a subcarrier as a frequency domain unit granularity. Optionally, an application scenario of another frequency domain unit granularity also falls within the protection scope of this application.

S1303: The terminal device processes the first frequency domain signal to obtain a first time domain signal, and transmits the first time domain signal to the network device. Correspondingly, the network device receives the first time domain signals from the terminal device.

For example, N-point IFFT transform may be performed on the first frequency domain signal to obtain the first time domain signal, and the first time domain signal may be referred to as a time domain transmitted signal. N is a positive integer. For example, the first time domain signal is obtained through 16-point IFFT transform.

S1304: The network device parses the first time domain signal to obtain at least one codeword corresponding to each symbol.

In an example, when the at least one codeword is a pilot codeword, the network device may perform channel estimation based on a pilot signal in the first time domain signal.

In another example, when the at least one codeword is a data codeword, the network device may perform data decoding based on a data signal in the first time domain signal.

For performing channel estimation based on the pilot signal and performing data decoding based on the data signal, refer to a conventional technology. Details are not described.

Based on the method shown in FIG. 13, the terminal device maps at least one codeword in a same symbol to a plurality of subcarriers in a spaced manner, thereby reducing multiple access interference between terminal devices while reducing a PAPR of a time domain transmitted signal.

The foregoing embodiment is described by using a single-layer communication scenario as an example. For example, the communication method in this application may be further applied to a multi-layer communication scenario. As shown in FIG. 15, the method may include the following steps.

S1501: A terminal device obtains a plurality of symbols.

One symbol may include a plurality of layers. One layer may correspond to at least one data codeword or at least one pilot codeword. For example, one symbol may include two layers, where one layer corresponds to at least one data codeword, and the other layer corresponds to at least one pilot codeword, or both layers correspond to a data codeword or a pilot codeword.

In an example, a codeword element/symbol included in a codeword corresponding to each layer may be distributed in a symbol in a sparse manner. For example, one symbol includes two layers, one layer corresponds to at least one data codeword, and the other layer corresponds to at least one pilot codeword. A data codeword element/symbol included in the at least one data codeword is distributed in the symbol in a sparse manner, and a data codeword element/symbol included in the at least one pilot codeword may also be distributed in the symbol in a sparse manner. Sparse manners for the two may be the same or different, and a codeword length of a sparse pilot may be less than or equal to a length of sparse data.

S1502: The terminal device separately processes a plurality of layers of codewords in a same symbol, and then maps processed codewords to a plurality of subcarriers, to obtain a second frequency domain signal.

Positions of subcarriers corresponding to codewords of different layers are different, and there is a spacing between subcarriers to which codewords of different layers are mapped. The subcarriers may be spaced in an equally spaced manner or in an unequally spaced manner. Codeword elements included in a same codeword are equally spaced.

In a possible implementation, the terminal device may separately perform FFT processing on the plurality of layers of codewords in the same symbol, and then map processed codewords to the plurality of subcarriers based on configuration information, to obtain the second frequency domain signal. For the configuration information, refer to the descriptions in the foregoing embodiment. Details are not described.

In an example, the terminal device may map the processed codewords in the same symbol to the plurality of subcarriers based on resource configuration information, to obtain the second frequency domain signal.

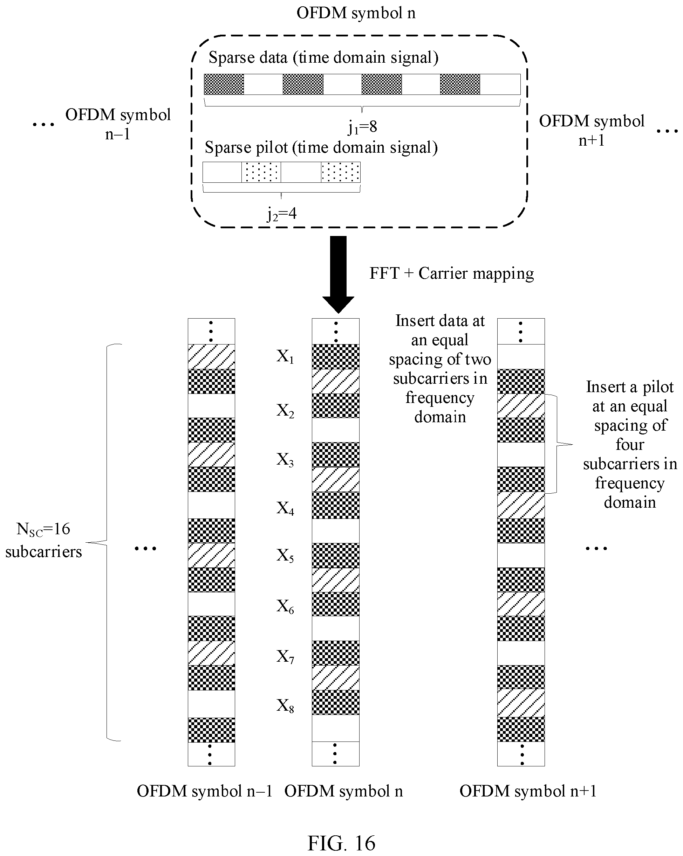

For example, the resource configuration information may include an identifier of a subcarrier corresponding to each codeword. As shown in FIG. 16, an OFDM symbol n includes one layer of sparse data and one layer of sparse pilots. The at least one data codeword and the at least one pilot codeword are padded with zeros, and are distributed in an OFDM symbol in a sparse manner (which are respectively the sparse data and the sparse pilot in FIG. 16). A length of the sparse data is 8 (equivalent to including 8 encoded symbols). A length of the sparse pilot is 4 (equivalent to including 4 encoded symbols). One coded symbol may correspond to X[n] in FIG. 4. For example, if the length of the sparse data is 8, n=8. The sparse data in FIG. 16 includes eight squares, and one grid corresponds to X[n]. In FIG. 16, one blank square in the sparse data represents one codeword element 0. Similarly, the sparse pilot in FIG. 16 may be described with reference to the sparse data, and details are not described.

In a scenario, the terminal device determines, based on the resource configuration information, that subcarriers corresponding to the sparse data in the OFDM symbol are respectively a subcarrier 1, a subcarrier 3, a subcarrier 5, a subcarrier 7, a subcarrier 9, a subcarrier 11, a subcarrier 13, and a subcarrier 15, and subcarriers corresponding to the sparse pilot are respectively a subcarrier 2, a subcarrier 6, a subcarrier 10, and a subcarrier 14. Based on the resource configuration information, the frequency domain signal corresponding to the OFDM symbol may be shown in FIG. 16.

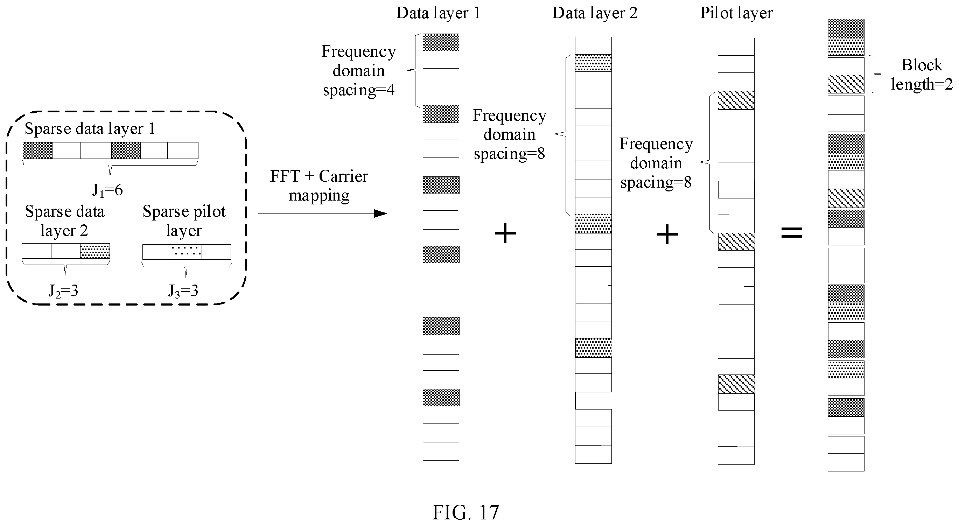

In another example, as shown in FIG. 17, one symbol includes a sparse data layer 1, a sparse data layer 2, and a sparse pilot layer. A length of the sparse data layer 1 is 6, a length of the sparse data layer 2 is 3, and a length of a pilot data layer is 3. After FFT and carrier mapping are performed on a codeword corresponding to each layer in the symbol, a frame structure shown in FIG. 17 may be obtained.

In FIG. 17, a frequency domain spacing corresponding to a data layer 1 is 4, a frequency domain spacing corresponding to a data layer 2 is 8, and a frequency domain spacing corresponding to a pilot layer is 8. In the frame structure obtained by superposing the plurality of layers, a codeword of each layer corresponds to a different subcarrier, to avoid interference.

In still another example, the terminal device may process the plurality of layers of codewords in the same symbol based on resource mapping pattern configuration information, and then map processed codewords to the plurality of subcarriers, to obtain the second frequency domain signal.

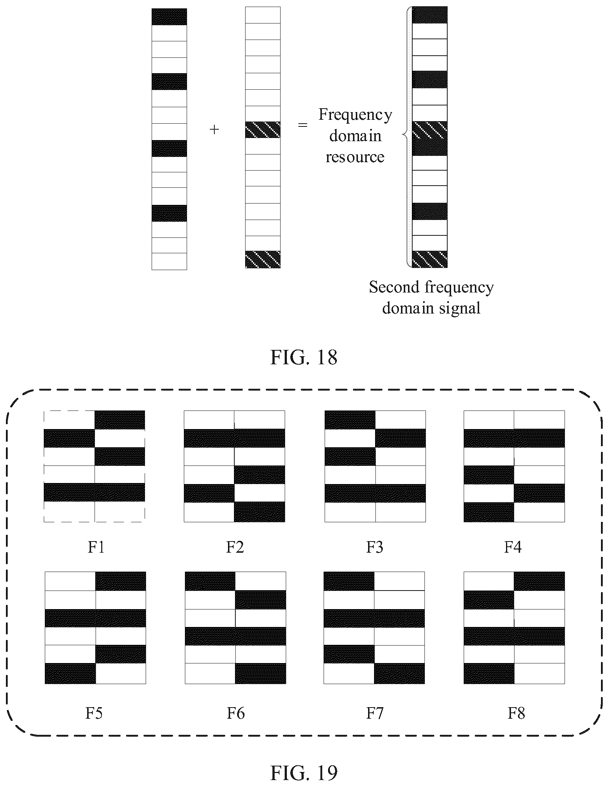

For example, a frequency hopping pattern included in the resource mapping pattern configuration information may be shown in FIG. 14, and one symbol includes one layer of data codewords and one layer of pilot codewords. The data codeword corresponds to the frequency hopping pattern 1, and the pilot codeword corresponds to the frequency hopping pattern 5. In this case, the second frequency domain signal may be shown in FIG. 18.

In yet another example, the terminal device may map codewords in the plurality of symbols to the plurality of subcarriers based on the resource mapping pattern configuration information. Frequency domain mapping patterns corresponding to codewords of different OFDM symbols may be the same or may be different.

Specifically, the terminal device can determine an active sub-block in a plurality of sub-blocks of a time-frequency resource based on a basis matrix in the resource mapping pattern configuration information, and map data codewords and/or pilot codewords in the plurality of symbols to frequency domain carriers based on mapping manners of a plurality of frequency hopping patterns.

One active sub-block includes a plurality of subcarriers and a plurality of OFDM symbols. FIG. 19 shows a plurality of frequency hopping patterns (which are respectively F1 to F8). One frequency hopping pattern indicates a sparse manner of codewords included in two symbols.

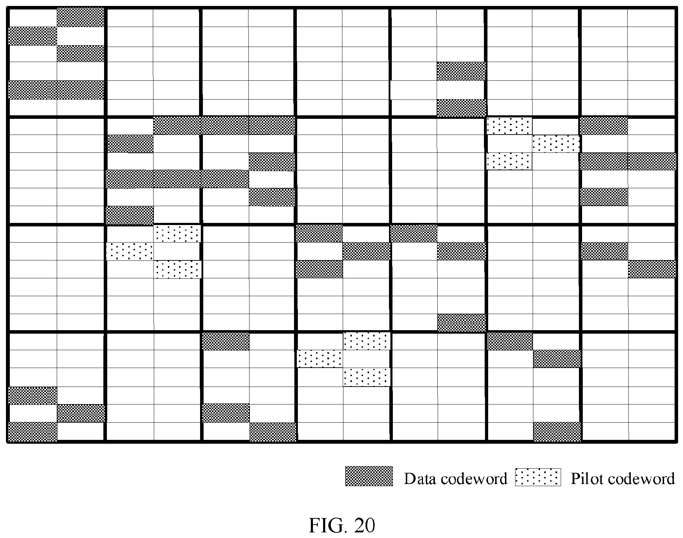

For example, FIG. 20 shows a possible time-frequency resource block scheme, and a basis matrix corresponding to the solution is as follows:

$$\boldsymbol{B}_{4\times7} = \begin{bmatrix} 1\ 0\ 0\ 0\ 1\ 0\ 0 \\ 0\ 1\ 1\ 0\ 0\ 1\ 1 \\ 0\ 1\ 0\ 1\ 1\ 0\ 1 \\ 1\ 0\ 1\ 1\ 0\ 1\ 0 \end{bmatrix}$$

Each sub-block of the time-frequency resource includes six subcarriers and two OFDM symbols. A frequency hopping pattern corresponding to the sub-block may be shown in FIG. 19. The terminal device may select a corresponding frequency hopping pattern from the plurality of frequency hopping patterns shown in FIG. 19 based on an indication of a frequency hopping sequence in the resource mapping pattern configuration information, and map the data codewords and/or the pilot codewords in the plurality of symbols to the plurality of subcarriers, to obtain a time-frequency signal. FIG. 20 shows a time-frequency signal obtained by mapping the plurality of symbols.

In still yet another example, to increase randomness of the sparse pattern in the frame structure, different sparse patterns may be selected in different OFDM symbols in a frequency hopping manner. That is, frequency domain mapping patterns of different OFDM symbols are different. The frequency hopping sequence may be generated according to a method of Euclidean geometry, or certainly, may be generated according to another method. This is not limited.

For example, the terminal device may map codewords in different OFDM symbols to different subcarriers based on preset frequency hopping patterns. The frequency hopping pattern may alternatively be described as a subgraph pattern, a sparse pattern, or the like. For example, frequency hopping sequence configuration information may include a frequency hopping sequence or a parameter used to generate a frequency hopping sequence.

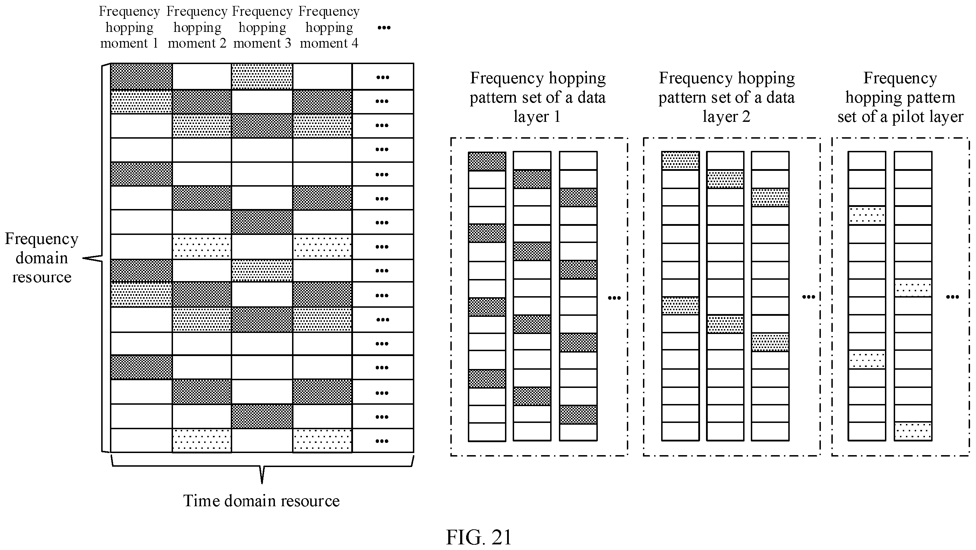

For example, one symbol includes a data layer 1, a data layer 2, and a pilot layer. As shown in FIG. 21, the terminal device may determine, based on a frequency hopping pattern set corresponding to each layer, a frequency hopping pattern corresponding to each layer. Then, the plurality of layers are mapped to the plurality of subcarriers based on the frequency hopping pattern corresponding to each layer, to obtain a frame structure shown in FIG. 21.

In a further example, for different terminal devices, each terminal device corresponds to a plurality of layers. Different terminal devices may map their respective plurality of layers to the plurality of subcarriers. Frequency domain units corresponding to each terminal device may be the same or may be different.

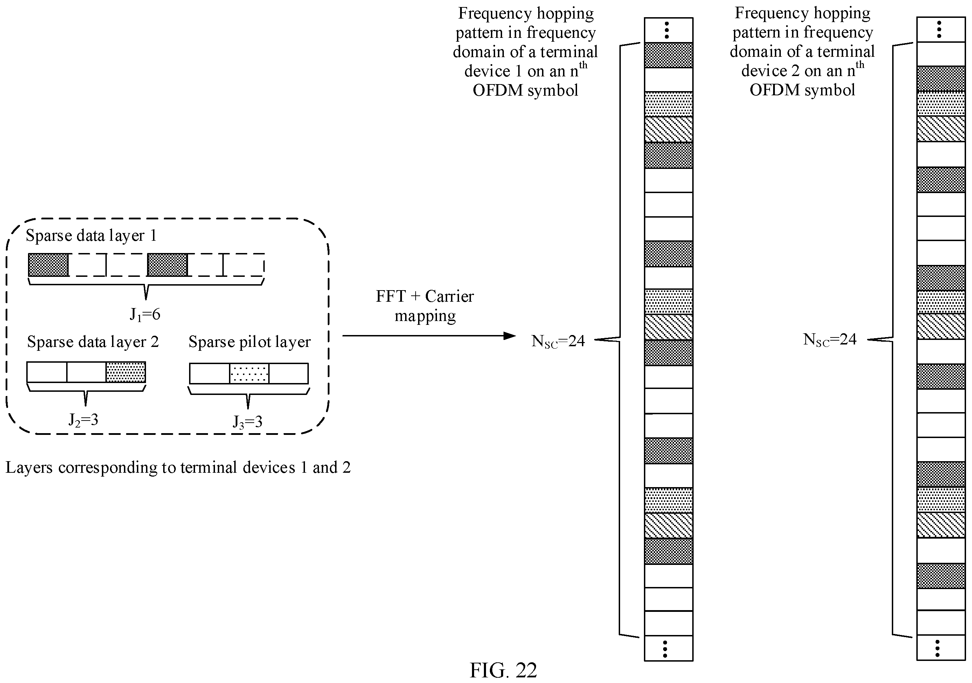

For example, as shown in FIG. 22, both a terminal device 1 and a terminal device 2 correspond to two layers of sparse data and one layer of sparse pilots. Different layers have different sparsities.

A codeword length of a data layer 1 is 6, a codeword length of a data layer 2 is 3, a codeword length of a pilot layer is 2, and a quantity of subcarriers is 24. The terminal device may map a data codeword of the data layer 1 to the plurality of subcarriers at a frequency domain spacing of 4, map a data codeword of the data layer 2 to the plurality of subcarriers at a frequency domain spacing of 8, and map a pilot codeword of the pilot layer to the plurality of subcarriers at a frequency domain spacing of 8. A frequency domain signal shown in FIG. 22 is obtained.

It can be learned from FIG. 22 that data at the data layer 2 of the terminal device 1 and data at the data layer 2 of the terminal device 2 occupy a same position in frequency domain. Therefore, a collision occurs. However, the data at the data layer 1 of the terminal device 1 and the data at the data layer 1 of the terminal device are mapped to different subcarriers. Therefore, there is no interference. Based on this manner, complete collision between the data of the terminal device 1 and the data of the terminal device is avoided.

S1503: The terminal device processes the second frequency domain signal to obtain a second time domain signal, and transmits the second time domain signal to the network device. Correspondingly, the network device receives the second time domain signal from the terminal device.

Processing the second frequency domain signal by the terminal device may be performing IFFT transform on the second frequency domain signal.

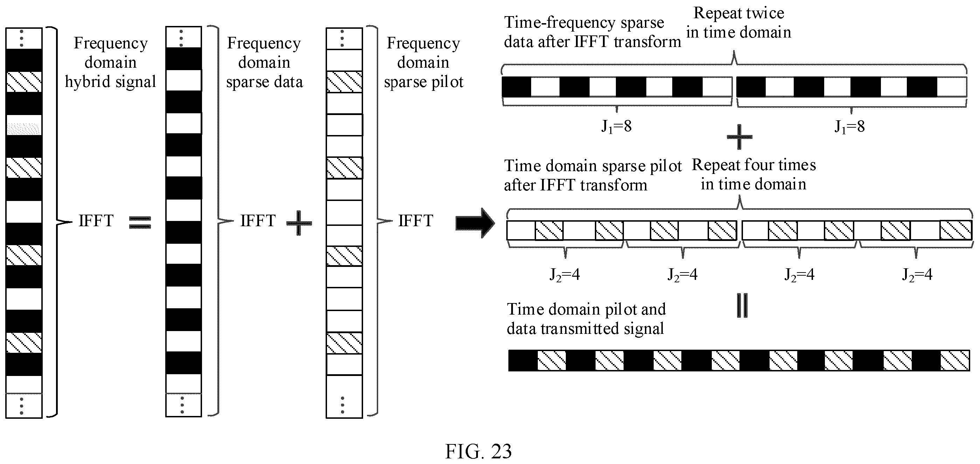

In an example, a pilot codeword and a data codeword are inserted into subcarriers in frequency domain in an equally spaced manner. After the IFFT transform is performed on the second frequency domain signal, an obtained time domain signal is a periodic repetition of an original sparse signal, and a quantity of repetitions is a spacing at which a codeword is inserted. For example, N=16-point IFFT transform is performed on a frequency domain signal on an $n^{th}$ OFDM symbol, to obtain a time domain signal as shown in FIG. 23.

The IFFT transform satisfies additivity, that is, IFFT(X+Y)=IFFT(X)+IFFT(Y). Therefore, a time domain signal obtained by performing the IFFT transform on a hybrid frequency domain signal of a pilot codeword and a data codeword may be: a signal obtained by separately performing the IFFT transform on a frequency domain signal corresponding to a frequency domain codeword and a frequency domain signal corresponding to the data codeword and then performing superposition. When sparse structures of a time domain pilot and the data codeword complement each other, a superposed time domain signal is a single-carrier modulated signal, thereby reducing a PAPR of a transmitted signal.

S1504: The network device performs channel estimation based on a pilot signal in the second time domain signal, and performs data decoding based on a data signal in a first time domain signal.

For S1504, refer to the descriptions of 1304. Details are not described.

Based on the method shown in FIG. 15, transmission of a plurality of layers of codewords can be implemented. The terminal device maps the plurality of layers of codewords to a plurality of subcarriers in a spaced manner, thereby reducing multiple access interference between users to a maximum extent while reducing a PAPR of a time domain transmitted signal.

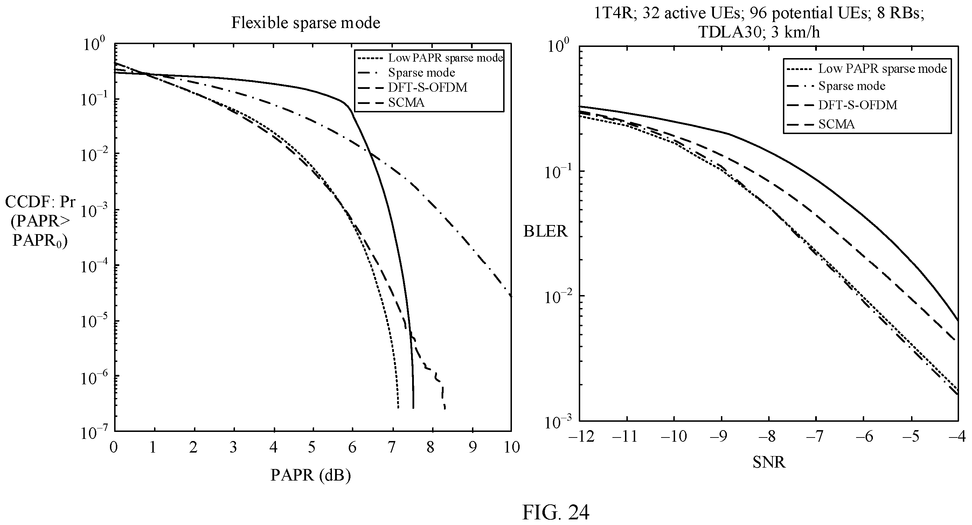

In an example, to verify performance of the frame structure provided in this application, the method in this embodiment of this application is simulated. A simulation result is shown in FIG. 24.

A simulation parameter may include a quantity of potential users (96), a quantity of active users (32), a system bandwidth (8 RBs), a channel (TDLA30), a moving speed (3 km/h), and an antenna configuration (one transmit antenna and four receive antennas).

It can be learned from the simulation result shown in FIG. 24 that, compared with DFT-s-OFDM and DFT-SCMA, the technical solutions of this application have effect of a low PAPR and a low block error rate (block error rate, BLER).

In embodiments of this application, unless otherwise specified, for same or similar parts of embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The foregoing descriptions are implementations of this application, but are not intended to limit the protection scope of this application. Steps in each embodiment may be partially performed (for example, the terminal device may not perform the steps performed by the terminal device in the foregoing embodiments). An execution sequence of different steps can be changed. Embodiments described in this specification may be combined with other embodiments, and steps of different embodiments in this specification may also be combined.

An "embodiment" mentioned in this specification means that a particular feature, structure, or characteristic described with reference to this embodiment may be included in at least one embodiment of this application. The phrase shown in various positions in this specification may not necessarily refer to a same embodiment, and is not an independent or optional embodiment exclusive from another embodiment.

It may be understood that, in the foregoing embodiments, the methods and/or steps implemented by the terminal device may alternatively be implemented by a component (for example, a processor, a chip, a chip system, a circuit, a logical module, or software) that can be used in the terminal device. The methods and/or steps implemented by the network device may alternatively be implemented by a component (for example, a processor, a chip, a chip system, a circuit, a logical module, or software) that can be used in the network device.

The foregoing mainly describes the solutions provided in this application. Correspondingly, this application further provides a communication apparatus. The communication apparatus is configured to implement the methods in the foregoing method embodiments. The communication apparatus may be the terminal device in the foregoing method embodiments, or an apparatus including the terminal device, or a component that can be used in the terminal device, for example, a chip or a chip system. The communication apparatus may be the network device in the foregoing method embodiments, an apparatus including the network device, or a component that can be used in the network device, for example, a chip or a chip system.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the communication apparatus based on the foregoing method embodiments. For example, each functional module may be obtained through division based on each corresponding function, or two or more functions may be integrated into one processing module.

The integrated module may be implemented in a form of hardware, or may be implemented in a form of a software functional module. It should be noted that, in embodiments of this application, division into the modules is an example and is merely logical function division. In actual implementation, another division manner may be used.

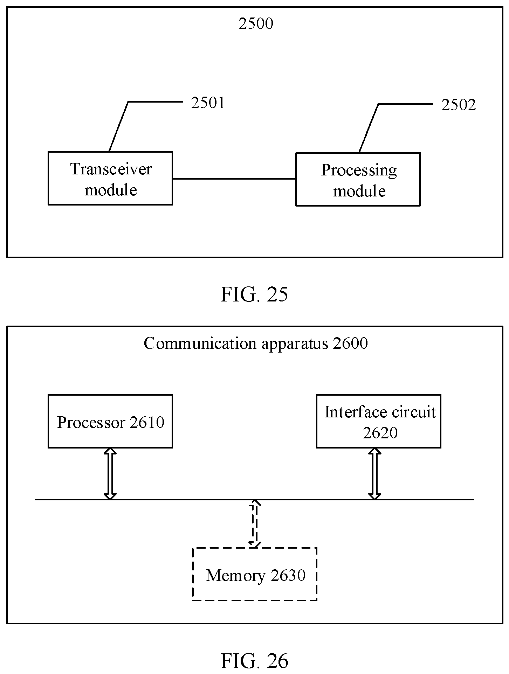

FIG. 25 and FIG. 26 are diagrams of possible structures of communication apparatuses according to embodiments of this application. These communication apparatuses may implement a function of the terminal device or the network device in the foregoing method embodiments. Therefore, beneficial effects of the foregoing method embodiments can also be implemented. In embodiments of this application, the communication apparatus may be the terminal device shown in FIG. 8, the network device shown in FIG. 8, or a module (for example, a chip) used in the terminal device or the network device.

As shown in FIG. 25, the communication apparatus 2500 includes a transceiver module 2501 and a processing module 2502. The communication apparatus 2500 may be configured to implement a function of the terminal device or the network device in the method embodiment shown in FIG. 13 or FIG. 15.

When the communication apparatus 2500 is configured to implement a function of the terminal device in the method embodiment in FIG. 13, the transceiver module 2501 is configured to obtain a plurality of symbols. The processing module 2502 is configured to: process at least one codeword in a same symbol, and then map a processed codeword to a plurality of subcarriers, to obtain a first frequency domain signal. The processing module 2502 is further configured to process the first frequency domain signal to obtain a first time domain signal. The transceiver module 2501 is further configured to transmit the first time domain signal to the network device.

When the communication apparatus 2500 is configured to implement a function of the network device in the method embodiment in FIG. 13, the transceiver module 2501 is configured to receive the first time domain signal; and the processing module 2502 is further configured to parse the first time domain signal to obtain at least one codeword corresponding to each symbol.

When the communication apparatus 2500 is configured to implement a function of the terminal device in the method embodiment in FIG. 15, the transceiver module 2501 is configured to obtain a plurality of symbols. The processing module 2502 is configured to: separately process a plurality of layers of codewords in a same symbol, and then map processed codewords to a plurality of subcarriers, to obtain a second frequency domain signal. The processing module 2502 is further configured to process the second frequency domain signal to obtain a second time domain signal. The transceiver module 2501 is further configured to transmit the second time domain signal to the network device.

When the communication apparatus 2500 is configured to implement a function of the network device in the method embodiment in FIG. 15, the transceiver module 2501 is configured to receive the second time-frequency signal, and the processing module 2502 is configured to perform channel estimation based on a pilot codeword in the second time domain signal, and perform data decoding based on a data received signal in the second time domain signal.

For more detailed descriptions of the transceiver module 2501 and the processing module 2502, refer to related descriptions in the foregoing method embodiments. Details are not described herein again.

As shown in FIG. 26, a communication apparatus 2600 includes a processor 2610 and an interface circuit 2620. The processor 2610 and the interface circuit 2620 are coupled to each other. It may be understood that the interface circuit 2620 may be a transceiver or an input/output interface. Optionally, the communication apparatus 2600 may further include a memory 2630, configured to store instructions executed by the processor 2610, or store input data required by the processor 2610 to run instructions, or store data generated after the processor 2610 runs instructions.

When the communication apparatus 2600 is configured to implement the methods in the foregoing method embodiments, the processor 2610 is configured to perform a function of the processing module 2502, and the interface circuit 2620 is configured to perform a function of the transceiver module 2501.

When the communication apparatus is a chip used in the terminal device, the chip in the terminal device implements a function of the terminal device in the foregoing method embodiments. The chip in the terminal device receives information from another module (for example, a radio frequency module or an antenna) in the terminal device, where the information is transmitted by the network device to the terminal device. Alternatively, the chip in the terminal device transmits information to another module (for example, a radio frequency module or an antenna) in the terminal device, where the information is transmitted by the terminal device to the network device.

When the communication apparatus is a chip used in the network device, the chip in the network device implements a function of the network device in the foregoing method embodiments. The chip in the network device receives information from another module (for example, a radio frequency module or an antenna) in the network device, where the information is transmitted by the terminal device to the network device. Alternatively, the chip in the network device transmits information to another module (for example, a radio frequency module or an antenna) in the network device, where the information is transmitted by the network device to the terminal device.

It may be understood that the processor in embodiments of this application may be a central processing module (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented by hardware, or may be implemented by the processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or the instructions are loaded and executed on a computer, the procedures or functions in embodiments of this application are completely or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, wherein the method comprises:

   obtaining, by a terminal device, a plurality of symbols, wherein each symbol comprises at least one codeword, and one codeword comprises at least one pilot codeword and/or at least one data codeword;
   mapping, by the terminal device, at least one codeword in a same symbol to at least one frequency domain unit, to obtain a frequency domain signal corresponding to the symbol, wherein different codewords are mapped to different frequency domain units, and there is a spacing between frequency domain units to which codeword elements comprised in a same codeword are mapped;
   processing, by the terminal device, a frequency domain signal corresponding to each symbol, to obtain a time domain signal corresponding to the symbol; and
   transmitting, by the terminal device, the time domain signal corresponding to each symbol to a network device.

2. The method according to claim 1, wherein a spacing between frequency domain units to which any adjacent pilot codeword elements are mapped is equal, and a spacing between frequency domain units to which any adjacent data codeword elements are mapped is equal.

3. The method according to claim 1 or 2, wherein if the one codeword comprises at least one pilot codeword and at least one data codeword, the at least one pilot codeword and the at least one data codeword are mapped to different frequency domain units.

4. The method according to any one of claims 1 to 3, wherein the mapping, by the terminal device, at least one codeword in a same symbol to at least one frequency domain unit, to obtain a frequency domain signal corresponding to the symbol comprises:
mapping, by the terminal device, the at least one codeword in the same symbol to the at least one frequency domain unit based on configuration information, to obtain the frequency domain signal corresponding to the symbol.

5. The method according to claim 4, wherein the configuration information comprises one or more of resource configuration information, resource mapping pattern configuration information, and frequency hopping sequence configuration information, wherein
the resource configuration information indicates a frequency domain unit corresponding to a codeword in each symbol, the resource mapping pattern configuration information indicates an arrangement manner of a frequency domain unit corresponding to a codeword in one or more symbols, and the frequency hopping sequence configuration information indicates position information of a frequency domain unit corresponding to a codeword in a symbol.

6. The method according to claim 5, wherein the configuration information further comprises sparse configuration information, and the sparse configuration information is used to perform sparse processing on a time domain codeword element in a symbol.

7. The method according to any one of claims 1 to 6, wherein the at least one codeword corresponds to a plurality of layers, and the mapping, by the terminal device, at least one codeword in a same symbol to at least one frequency domain unit comprises:
mapping, by the terminal device, codewords corresponding to different layers to different frequency domain units.

8. The method according to claim 7, wherein the at least one codeword corresponds to a plurality of layers, and the mapping, by the terminal device, at least one codeword in a same symbol to at least one frequency domain unit comprises:
processing, by the terminal device, a codeword corresponding to each layer, and mapping a processed codeword to the at least one frequency domain unit.

9. The method according to claim 5 or 6, wherein the configuration information further comprises a frequency hopping pattern, and the mapping, by the terminal device, at least one codeword in a same symbol to at least one frequency domain unit, to obtain a frequency domain signal corresponding to the symbol comprises:

   determining, by the terminal device based on a first matrix, a frequency hopping pattern corresponding to the at least one codeword, wherein an element in the first matrix corresponds to one resource block, and when the element is a first character, the resource block corresponding to the element is an available resource block; and
   mapping, by the terminal device, the at least one codeword in the same symbol to the at least one frequency domain unit based on the frequency hopping pattern corresponding to the at least one codeword, to obtain the frequency domain signal corresponding to the symbol.

10. A communication method, wherein the method comprises:

   receiving, by a network device, time domain signals corresponding to a plurality of symbols from a terminal device, wherein a time domain signal corresponding to each symbol is determined based on a frequency domain signal corresponding to the symbol, and the frequency domain signal corresponding to the symbol is obtained by mapping at least one codeword in the symbol to at least one frequency domain unit, wherein the at least one codeword comprises at least one pilot codeword and/or at least one data codeword, different codewords are mapped to different frequency domain units, and there is a spacing between frequency domain units to which codeword elements comprised in a same codeword are mapped; and
   parsing, by the network device, the time domain signal to obtain at least one codeword of each symbol.

11. The method according to claim 10, wherein a spacing between frequency domain units to which any adjacent pilot codeword elements are mapped is equal, and a spacing between frequency domain units to which any adjacent data codeword elements are mapped is equal.

12. The method according to claim 10 or 11, wherein if the one codeword comprises at least one pilot codeword and at least one data codeword, the at least one pilot codeword and the at least one data codeword are mapped to different frequency domain units.

13. The method according to any one of claims 10 to 12, wherein the method further comprises:
transmitting, by the network device, configuration information to the terminal device, wherein the configuration information is used to map the at least one codeword of each symbol to the at least one frequency domain unit.

14. The method according to claim 13, wherein the configuration information comprises one or more of resource configuration information, resource mapping pattern configuration information, and frequency hopping sequence configuration information, wherein
the resource configuration information indicates a frequency domain unit corresponding to a codeword in each symbol, the resource mapping pattern configuration information indicates an arrangement manner of a frequency domain unit corresponding to a codeword in one or more symbols, and the frequency hopping sequence configuration information indicates position information of a frequency domain unit corresponding to a codeword in a symbol.

15. The method according to claim 14, wherein the configuration information further comprises sparse configuration information, and the sparse configuration information is used to perform sparse processing on a time domain codeword element in a symbol.

16. The method according to any one of claims 10 to 15, wherein the at least one codeword corresponds to a plurality of layers, and codewords corresponding to different layers are mapped to different frequency domain units.

17. The method according to claim 16, wherein the at least one codeword comprises a plurality of layers, and the frequency domain signal corresponding to the symbol is obtained by processing a codeword corresponding to each layer and then mapping a processed codeword to the at least one frequency domain unit.

18. The method according to claim 13 or 14, wherein the configuration information further comprises a frequency hopping pattern, and the method further comprises:

transmitting, by the network device, a first matrix to the terminal device, wherein an element in the first matrix corresponds to one resource block, and when the element is a first character, the resource block corresponding to the element is an available resource block, wherein
the frequency domain signal is obtained by mapping the at least one codeword to the at least one frequency domain unit based on a frequency hopping pattern corresponding to the at least one codeword.

19. A communication apparatus, wherein the apparatus comprises:

a transceiver module, configured to obtain a plurality of symbols, wherein each symbol comprises at least one codeword, and one codeword comprises at least one pilot codeword and/or at least one data codeword; and
a processing module, configured to map at least one codeword in a same symbol to at least one frequency domain unit, to obtain a frequency domain signal corresponding to the symbol, wherein different codewords are mapped to different frequency domain units, and there is a spacing between frequency domain units to which codeword elements comprised in a same codeword are mapped, wherein
the processing module is further configured to process a frequency domain signal corresponding to each symbol, to obtain a time domain signal corresponding to the symbol; and
the transceiver module is further configured to transmit the time domain signal corresponding to each symbol to a network device.

20. The apparatus according to claim 19, wherein a spacing between frequency domain units to which any adjacent pilot codeword elements are mapped is equal, and a spacing between frequency domain units to which any adjacent data codeword elements are mapped is equal.

21. The apparatus according to claim 19 or 20, wherein if the one codeword comprises at least one pilot codeword and at least one data codeword, the at least one pilot codeword and the at least one data codeword are mapped to different frequency domain units.

22. A communication apparatus, wherein the apparatus comprises a transceiver module and a processing module, wherein

the transceiver module is configured to receive time domain signals corresponding to a plurality of symbols from a terminal device, wherein a time domain signal corresponding to each symbol is determined based on a frequency domain signal corresponding to the symbol, and the frequency domain signal corresponding to the symbol is obtained by mapping at least one codeword in the symbol to at least one frequency domain unit, wherein the at least one codeword comprises at least one pilot codeword and/or at least one data codeword, different codewords are mapped to different frequency domain units, and there is a spacing between frequency domain units to which codeword elements comprised in a same codeword are mapped; and

the processing module is configured to parse the time domain signal to obtain at least one codeword of each symbol.

23. The apparatus according to claim 22, wherein a spacing between frequency domain units to which any adjacent pilot codeword elements are mapped is equal, and a spacing between frequency domain units to which any adjacent data codeword elements are mapped is equal.

24. The apparatus according to claim 22 or 23, wherein if the one codeword comprises at least one pilot codeword and at least one data codeword, the at least one pilot codeword and the at least one data codeword are mapped to different frequency domain units.

25. A communication apparatus, comprising a module configured to perform the method according to any one of claims 1 to 9 or 10 to 18.

26. A communication apparatus, comprising a processor and a communication interface, wherein the communication interface is configured to receive a signal from a communication apparatus other than the communication apparatus and transmit the signal to the processor, or transmit a signal from the processor to a communication apparatus other than the communication apparatus; and the processor is configured to implement the method according to any one of claims 1 to 9 or 10 to 18 through a logic circuit or by executing code instructions.

27. A communication system, comprising a terminal device and a network device, wherein the terminal device is configured to perform the method according to any one of claims 1 to 9, and the network device is configured to perform the method according to any one of claims 10 to 18.

28. A computer-readable storage medium, wherein the computer-readable storage medium stores a computer program, and when the computer program is run, the method according to any one of claims 1 to 9 or 10 to 18 is implemented.

29. A computer program product, wherein the computer program product comprises computer program code, and when the computer program code is run, the method according to any one of claims 1 to 9 or 10 to 18 is implemented.

FIG. 1

EP 4 572 264 A1

| Slot | | | | | | | | | | | | | |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

Data  Front-loaded DMRS          Data

## FIG. 2A

| Slot | | | | | | | | | | | | | |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

Data  Front-loaded DMRS       Data       Additional DMRS  Data

## FIG. 2B

FIG. 3

FIG. 4

FIG. 5

F1 F2 F2 F2 F2 F2

Sparse subgraph pattern set of a sparsity=0.5 (P=2, and Q=2)

FIG. 6

12
REs

14 symbols

■ Data codeword

⋮⋮ Pilot codeword

FIG. 7

FIG. 8

FIG. 9

1000

1001

1007

Processor

CPU 0

CPU 1

Processor

CPU 0

CPU 1

1004

Communication
line 1002

Memory

1003

1005

1006

Communication
interface

Output device

Input device

FIG. 10

Data
symbol

Zero-
padding
operation

J1-FFT

Subcarrier
mapping

N-IFFT

FIG. 11

FIG. 12A

FIG. 12B

Terminal
device

Network
device

S1301: Obtain a plurality of symbols

S1302: Process at least one codeword in a
same symbol, and then map a processed
codeword to a plurality of subcarriers, to
obtain a first frequency domain signal

First time-frequency
signal

S1303: Process the first frequency domain
signal to obtain a first time domain signal

S1304: Parse the first time domain signal to
obtain at least one codeword corresponding
to each symbol

FIG. 13

Data codeword

Pilot codeword

FIG. 14

```
┌──────────┐                              ┌──────────┐
│ Terminal │                              │ Network  │
│  device  │                              │  device  │
└────┬─────┘                              └────┬─────┘
     │                                         │
┌────┴──────────────────────────────┐         │
│ S1501: Obtain a plurality of symbols│        │
└────┬──────────────────────────────┘         │
     │                                         │
┌────┴──────────────────────────────┐         │
│ S1502: Separately process a plurality of    │
│ layers of codewords in a same symbol, and   │
│ then map processed codewords to a plurality │
│ of subcarriers, to obtain a second frequency│
│ domain signal                               │
└────┬──────────────────────────────┘         │
     │                    Second time-frequency│
     │                          signal         │
┌────┴──────────────────────────────┐         │
│ S1503: Process the second frequency domain  │───────►│
│ signal to obtain a second time domain signal│        │
└────┬──────────────────────────────┘         │
     │                            ┌────────────┴──────────────┐
     │                            │ S1504: Perform channel estimation based on │
     │                            │ a pilot codeword in the second time domain │
     │                            │ signal, and perform data decoding based on a│
     │                            │ data received signal in the second time    │
     │                            │ domain signal                              │
     │                            └────────────┬──────────────┘
     │                                         │
```

FIG. 15

OFDM symbol n

Sparse data (time domain signal)

$j_1=8$

Sparse pilot (time domain signal)

$j_2=4$

... OFDM symbol
n−1

OFDM symbol ...
n+1

FFT + Carrier mapping

Insert data at
an equal
spacing of two
subcarriers in
frequency
domain

$X_1$

$X_2$

$X_3$

$X_4$

$X_5$

$X_6$

$X_7$

$X_8$

Insert a pilot
at an equal
spacing of
four
subcarriers in
frequency
domain

$N_{SC}=16$
subcarriers

OFDM symbol n−1    OFDM symbol n        OFDM symbol n+1

FIG. 16

FIG. 17

Frequency domain resource

Second frequency domain signal

FIG. 18

F1          F2          F3          F4

F5          F6          F7          F8

FIG. 19

Data codeword     Pilot codeword

FIG. 20

Frequency hopping moment 1   Frequency hopping moment 2   Frequency hopping moment 3   Frequency hopping moment 4   •••

Frequency domain resource

Time domain resource

Frequency hopping pattern set of a data layer 1

Frequency hopping pattern set of a data layer 2

Frequency hopping pattern set of a pilot layer

FIG. 21

EP 4 572 264 A1

Frequency hopping pattern in frequency domain of a terminal device 1 on an $n^{th}$ OFDM symbol

Frequency hopping pattern in frequency domain of a terminal device 2 on an $n^{th}$ OFDM symbol

Sparse data layer 1

$J_1=6$

Sparse data layer 2

Sparse pilot layer

$J_2=3$

$J_3=3$

FFT + Carrier mapping

$N_{SC}=24$

$N_{SC}=24$

Layers corresponding to terminal devices 1 and 2

FIG. 22

EP 4 572 264 A1

Frequency domain hybrid signal

IFFT =

Frequency domain sparse data

IFFT +

Frequency domain sparse pilot

IFFT ⇒

Time-frequency sparse data after IFFT transform — Repeat twice in time domain

$J_1=8$        +        $J_1=8$

Time domain sparse pilot after IFFT transform — Repeat four times in time domain

$J_2=4$        $J_2=4$        $J_2=4$        $J_2=4$

Time domain pilot and data transmitted signal        =

FIG. 23

EP 4 572 264 A1

Flexible sparse mode

1T4R; 32 active UEs; 96 potential UEs; 8 RBs; TDLA30; 3 km/h

CCDF: Pr (PAPR> $PAPR_0$)

PAPR (dB)

Low PAPR sparse mode
Sparse mode
DFT-S-OFDM
SCMA

BLER

SNR

FIG. 24

EP 4 572 264 A1

2500

2501

2502

Transceiver module

Processing module

FIG. 25

Communication apparatus 2600

Processor 2610

Interface circuit 2620

Memory 2630

FIG. 26

## INTERNATIONAL SEARCH REPORT

| International application No. |
| --- |
| **PCT/CN2022/128423** |

| A. | CLASSIFICATION OF SUBJECT MATTER |
| --- | --- |

H04L27/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04L H04Q H04B

Documentation searched other than minimum documentation to the extent that such documents are included in the fields searched

Electronic data base consulted during the international search (name of data base and, where practicable, search terms used)

WPABSC, CNTXT, VEN, VCN, ENTXT, CJFD, 3GPP: 正交, 多址, 干扰, 导频, 符号, 码, 映射, 频域, 间隔, 跳频, 矩阵, 资源块, orthogonal frequency, multiple access, interference, pilot, symbol, code, map, frequency domain, interval, hop, resources block, RB, matrix

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110351009 A (SPREADTRUM COMMUNICATIONS (SHANGHAI) CO., LTD.) 18 October 2019 (2019-10-18) description, paragraphs 0048-0141 | 1-29 |
| X | US 2020204414 A1 (INDUSTRIAL TECHNOLOGY RESEARCH INSTITUTE) 25 June 2020 (2020-06-25) description, paragraphs 0022-0041 | 1-29 |
| A | CN 105099614 A (SHANGHAI NATIONAL ENGINEERING RESEARCH CENTER OF DIGITAL TELEVISION CO., LTD.) 25 November 2015 (2015-11-25) entire document | 1-29 |
| A | WO 2018074719 A1 (LG ELECTRONICS INC.) 26 April 2018 (2018-04-26) entire document | 1-29 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **03 July 2023** | **06 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/128423**

| Patent document cited in search report | | | Publication date (day/month/year) | Patent family member(s) | | | Publication date (day/month/year) |
|---|---|---|---|---|---|---|---|
| CN | 110351009 | A | 18 October 2019 | CN | 110351009 | B | 04 March 2022 |
| US | 2020204414 | A1 | 25 June 2020 | None | | | |
| CN | 105099614 | A | 25 November 2015 | CN | 105099614 | B | 17 April 2020 |
| WO | 2018074719 | A1 | 26 April 2018 | US | 2020053789 | A1 | 13 February 2020 |
| | | | | US | 10757740 | B2 | 25 August 2020 |

Form PCT/ISA/210 (patent family annex) (July 2022)